# EUROPEAN PATENT APPLICATION

(11) **EP 1 565 019 A1**
(43) Date of publication of application: **17.08.2005**
(21) Application number: 03811098.7
(22) Date of filing: 10.11.2003
(51) Int. Cl.: H04Q 7/38, G06F 13/00

(54) **INFORMATION DISTRIBUTION SYSTEM, INFORMATION ACQUISITION DEVICE, INFORMATION DISTRIBUTION SERVER, INFORMATION REPRODUCTION DEVICE, INFORMATION REPRODUCTION METHOD, INFORMATION DISTRIBUTION CONTROL METHOD, INFORMATION DISTRIBUTION CONTROL PROGRAM, AND COMPUTER-READABLE RECORDING MEDIUM**

(30) Priority: 14.11.2002 JP 2002330863; 07.03.2003 JP 2003062582
(71) Applicant: Omron Corporation, Kyoto-shi, Kyoto 600-8530 (JP)
(72) Inventor: ANDO, Tanichi, Shimogyoku, Kyoto 600-8530 (JP); KUSANO, Yuji, Shimogyoku, Kyoto 600-8530 (JP); OMBE, Takaaki, Shimogyoku, Kyoto 600-8530 (JP); KANAYAMA, Kenji, Nagaokakyo-shi, Kyoto 617-0822 (JP)
(74) Representative: Calderbank, Thomas Roger
(86) International application number: PCT/JP2003/014287
(87) International publication number: WO 2004/045235

(57) **Abstract**

The subject invention provides an information delivery system which performs information reproduction according to reproduction circumstances, such as available communication modes for the information reproduction device, user's request etc., thereby carrying out information delivery in the most appropriate way to the user. For example, the center system (3) determines the level of attribute information of the target information, which is information item that the user of vehicle (2) wishes to obtain through communication with the center system (3). According to this determination, the center system (3) selects one of DSRC communication using a DSRC terminal device (1) and a DSRC radio device (4), or a mobile phone (5) as means for transmission of target information.

## Description

### TECHNICAL FIELD

The present invention relates to an information delivery system for reproducing information delivered from an information delivery center, with an information reproducing apparatus.

The present invention particularly relates to a radio information communicating system, which combines short range communication within a range from several meters to several tens of meters, and wide area public communication such as public wireless communication with portable phones.

Further, the present invention relates to an information delivery system (content item delivery system), an information reproducing apparatus (content item reproducing apparatus) for reproducing the content items, and an information delivery center (content item delivery center) which delivers the content items. The information delivery system delivers content items with information delivery means through networks or physical mediums. Furthermore, the present invention relates to an information reproduction method (content item reproduction method) for the information reproducing apparatus, an information delivery control method (content item delivery method) for the information delivery center, and its program storage medium.

The present invention particularly relates to a content item delivery system in which a series of information is downloaded in the background from a certain content item delivery center by content item reproduction means such as car audio, while allowing the user to select an arbitrary one of the received series of information and decide the reproduction order of the selected content item. This order of reproducing content item programs is changeable not only by users, but also by the delivery center, or intervention of event information from external sensors or the like.

### BACKGROUND ART

Conventionally, various information delivery systems have been widely used. The information delivery system allows an information reproducing apparatus to reproduce information, which is delivered from information delivery centers. Examples of this delivery system include a system for providing information via dedicated short-range communications (DSRC) such as portable phones (described later), a system for providing information (content items) through FM radios, or a system for providing music information (content items) to be reproduced by CD players or MP3 players. The following describes such a conventional information delivery system in detail.

First described are conventional arts of an information delivery system using wide-range communication terminals such as portable phones or PHSs, and an information delivery system using short-range wireless communication such as DSRC.

In these years, portable phones and PHSs® have been commonly used as wide-range public wireless services. As such public wireless services allow "anytime, anywhere" communication, it is almost becoming one of social infrastructures.

Though portable phones and PHSs charge for every single communication, times and places for their usages are not so restricted, thereby providing a user-friendly communication system. Concerning speed and charges for communication, however, communication systems with portable phones, PHSs and the like do not seem suitable for communication of large amount of information.

On the other hand, as wireless communication for a short communication range (a several meters to several tens of meters), so called DSRC is now in practical use.

One example of DSRC is a car navigation system using an electric wave of 2.45 GHz, or an electronic toll collection system (ETC system) using an electric wave of 5.8 GHz.

Since the communication range of DSRC is small, it has a shortcoming in that communication can be carried out only near the set point of a DSRC terminal apparatus (antenna). However, taking advantages of this characteristic, DSRC has a strong advantage in that large amount of information can be exchanged at a high speed (normally, a few Mbps per second or more) with high reliability.

Another excellent feature of DSRC is that, since radios are placed with a certain distance in this system, the same radio frequency can be repeatedly used, allowing efficient utilization of electric wave source.

In the DSRC system, an antenna can be placed easily, which ensures low communication costs. Also, as seen in a Japanese car navigation system, a nation or related institutions establish antenna as public infrastructures, allowing the users to receive services in the DSRC system without paying communication fees. Also, in some other services, a sales price of DSRC radios contains a fee for operating a center system in DSRC.

Therefore, the DSRC system is extremely useful wireless communication system for downloading a large amount of information such as music data or image data. The technique of the short range wireless communication field also includes a wireless local area network (LAN) system which enables connecting to wireless Internet with an antenna set outside or inside a public facility, which has been currently in practical use. One example of this system may be HotSpot®.

As described above, with rapid development of communication network technologies, wireless communication enabling communicating with movable bodies such as cars is expected to widely expand to various applications, including electronic settlement in movable bodies or content item providing services. Therefore, exemplified means of wireless communication such as portable phones, PHSs, and DSRC is likely to further expand in the future with their specific usefulness.

In a conventional system, wide range wireless communication such as portable phones or PHSs, and short range wireless communication such as DSRC, both having excellent features, are structured and operated separately. Therefore, for example, if a user intended to receive information communication services when he/she was driving a car, the user had to choose either of communication with portable phones etc., or communication with DSRC.

However, when the user driving a car selects the communication with DSRC outside the communication range of the DSRC, communication is impossible in the first place. On the other hand, when the user selects the communication with a portable phone etc., and attempts to download a large amount of information, it requires high communication fee.

Japanese Laid-Open Patent Application (*Tokukai* 2001-184594, publication date: July 6, 2001) discloses a data transfer system which uses both the DSRC communication and the portable phone communication in vehicle. In this system, the DSRC communication is primarily used, but when the DSRC communication in the vehicle cannot be completed within a certain period of time, the rest of a series of data is transferred by using the portable phone communication.

However, with the technology described in the publication in which the DSRC communication is primarily used, the user is able to request data transfer only when a vehicle is located in an accessible area of the DSRC communication. Therefore, when the user in a vehicle wants to acquire information immediately, the user has to drive the vehicle to the accessible area of the DSRC communication, which is quite troublesome.

As well as these drawbacks of the information delivery system using portable phones and DSRC, other information delivery systems for delivering content items through FM radios, or for delivering content items reproduced by CD players or MP3 players also have the following problems.

For example, content items delivered from FM radios or the like are reproduced by a FM radio receiving device, which functions as means for reproducing content items, according to the order in delivery, which is decided by content item creators. That is, information is provided unilaterally regardless of user's intention. Therefore, in this case, a user cannot acquire intended information dynamically.

For example, in the case of music information using CD players, not only for Off-line music data but also on-line music information, once a reproducing order is determined, the contents of information and the order of reproducing information are fixed. Thus, the contents of information and the order in information delivery do not always meet user's current intention.

With CD changers or MP3 players, the order of reproducing information can be relatively flexibly changed. However, the contents of information, such as music information itself, are fixed and desired information cannot be interactively received on user's demand.

Meanwhile, Japanese Laid-Open Patent Publication (*Tokukai* 2001-343979, publication date: December 14, 2001) discloses a music and information providing apparatus used in vehicle, which allows a user to acquire information from the Internet while he/she is driving a car, aimed at overcoming conventional problems of insecurity of operation in a system of acquiring specifically-customized information. Accordingly, in this method, the programs reflecting the requests in information delivery of the driver (user), such as the order of delivery, which are previously recorded in an information server. More specifically, the device mounted to the vehicle assembles a program based on data structured by the driver, and controls a radio, a CD player, or a text information reading unit to provide the information to the driver.

However, even with this method, a way of providing information to a user is still unilateral in that the information is delivered according to previously-recorded setting in an information server, that is, the system is not capable of handling dynamic change in details each time on user's current demand. In other words, the system may require the user to listen to unwanted information until the target information is provided. In this view, this is not a perfect system for providing information completely on user's demand.

Further, Japanese Laid-Open patent application Tokukai 2002-318132 (Publication date: October 31, 2002) discloses an interactive voice communication navigation system, a mobile terminal device, and an interactive voice communication server. In this system, when a user driving a car wants the service, he/she presses the inquiry button in the terminal device mounted in the car, so that a communication line between the user and the interactive voice communication server is established. Then, when the user intends to request, for example, driving route assistance for obtaining instruction to the destination or the like, the user send a voice message including a predetermined key word, such as "Route assistance, please", to the interactive voice communication server, which is an information delivery service provider which delivers various useful information in car navigation. Apart from route assistance, the user is also able to request "traffic report", "event information" etc. for the route to the destination. In this case, the information delivery service provider not only provides route assistance information, but also carries out search of information based on destination information and personal information, and transmits various items of information suitable for the user to the terminal in the user's car.

However, this system is used only for delivery of traffic report or event information for the route to the destination which is given to the navigation system on user's demand, and is not intended to carry out delivery of other general information, or music information primarily or in a specific order.

As described, in the conventional information delivery system, the user cannot dynamically obtain/reproduce a series of information.

The present invention is made in view of the foregoing conventional problems, and an object is to provide an information delivery system capable of reproducing information, which has been delivered to the user in an optimum way, according to the information reproduction condition, such as available communication method for the information reproduction device, or user's request.

More specifically, an object of the present invention is to provide an information system, an information acquisition device, an information delivery server, an information delivery control system, an information delivery control program, and a computer-readable storage medium, which fully use respective benefits of the wide range communication and short range communication, thereby improving user friendliness in obtaining desired information from the information delivery center (center system).

Further, the present invention is aimed at realizing a service constantly meeting the user's demand, the circumstances, and the condition of the third party, with a function of following any changes in such demands and/or conditions. The present invention is also aimed at realizing interactive communication with the users in a system for delivering information from an information delivery center to an information reproduction device. To more specifically explain the objects, the following describes an example where the information user uses an audio system provided in a car as an information reproduction device (content item reproduction terminal).

This example assumes information including, for example, 1) news program, 2) forecast program, 3) traffic report program, and 4) music program, which is provided to the content item reproduction terminal via a network. When the reproduction order is not specified, the content items, which are saved in the content item storage section, are reproduced in a predetermined order. In this example, the reproduction order is set as follows: i) news program, ii) forecast program, iii) traffic report program, and iv) music program, however the order is not reflecting user's intention.

In this case, the system of the present invention allows the user to immediately switch the programs with user's voice instruction or a predetermined operation via user interface means. For example, the user is able to cut off the i) news program to display the ii) forecast program with voice instruction of "Next" or the like. In this way, the information reproduction device enables continuous reproduction of content items.

### DISCLOSURE OF INVENTION

In order to solve the foregoing conventional problems, the present invention provides an information delivery system in which an information reproduction device reproduces information delivered from an information delivery center, the information delivery system comprising information reproduction mode changing means for changing reproduction mode for the information based on circumstances on information reproduction in the information reproduction device.

The followings are details of the "circumstances on information reproduction".
1) Available communication mode: which one of (i) wide-range-communication using a mobile phone and (ii) narrow-range communication using DSRC can be used to obtain the information to be reproduced (target information) from the information delivery center (center system).
2) Necessity of reproduction of information obtained from the information delivery center.
3) User's request as to whether the wide-range communication or the narrow range communication is used to obtain the information to be reproduced (target information) from the information delivery center.
3) Progress of current information reproduction in the information reproduction device.
4) Order of reproduction of information according to user's request when a plurality of information items (content items) are delivered from the information delivery center to the information reproduction device.
5) Various incidents which occur in disregard of user's intention, such as breakdown of vehicle mounting the information reproduction device, earthquake etc.

Further, the followings are details of "reproduction mode for the information".

Communication mode used for obtaining the information to be reproduced from the information delivery center. The communication mode may be (i) wide-range-communication using a mobile phone or (ii) narrow-range communication using DSRC.

Order of information reproduction in practice in the information reproduction device when a plurality of content items are delivered from the information delivery center to the information reproduction device.

More specifically, with the foregoing arrangement, the information reproduction mode changing means changes reproduction mode in reproducing the information items above according to reproduction circumstances for the information items. That is, condition in information reproduction in the user's information reproduction device is detected, and the information reproduction mode is changed according to each condition of information reproduction. On this account, reproduction of information delivered from the information delivery center is performed in the optimum manner.

Additional objects, features, and strengths of the present invention will be made clear by the description below. Further, the advantages of the present invention will be evident from the following explanation in reference to the drawings.

### BRIEF DESCRIPTION OF DRAWINGS

Figure 1 is a conceptual view illustrating one embodiment of communication system according to the present invention.
Figure 2 is a block diagram illustrating a structure of DSRC terminal device in communication system of Figure 1.
Figure 3 is a block diagram illustrating a structure of center system in the communication system of Figure 1.
Figure 4 is a block diagram illustrating a structure of mobile phone used for the communication system of Figure 1.
Figure 5 is a flow chart illustrating a part of operation in the communication system of Figure 1.
Figure 6 is a flow chart illustrating a part of operation in the communication system of Figure 1.
Figure 7 is a flow chart illustrating a part of operation in the communication system of Figure 1.
Figures 8(a) and 8(c) are drawings of examples of determination information transmitted to the communication system of Figure 1. Figures 8(b) and 8(d) are drawings illustrating examples of information for allowing a user to select a DSRC terminal device.
Figure 9 is a flow chart illustrating a part of operation for reserving a DSRC terminal device used for transmission of target information, in the communication system of Figure 1.
Figure 10 is a flow chart illustrating a part of operation for reserving a DSRC terminal device used for transmission of target information, in the communication system of Figure 1.
Figure 11 is a drawing illustrating a determination reference table used in the communication system of Figure 1.
Figure 12 is a schematic diagram of a content item delivery system according to the present invention.
Figure 13 is a structure diagram of sub-directory of content item according to the present invention.
Figure 14 is a conceptual view showing a flow of program reproduction and downloading when the event information is supplied to the content item reproduction terminal.
Figure 15 is a block diagram showing function of content item reproduction terminal.
Figure 16 is a conceptual diagram showing a state where the content item file is ready to be reproduced in a predetermined order.
Figure 17 is a conceptual view showing request operation for downloading of new content item, which are not stored in a content item storage section, from the delivery center.
Figure 18 is a flow chart of request operation shown in Figure 17.
Figure 19 is a conceptual view showing another request operation for downloading of new content item, which are not stored in a content item storage section, from the delivery center.
Figure 20 is a flow chart of request operation shown in Figure 19.
Figure 21 is a conceptual view showing still another request operation for downloading of new content item, which are not stored in a content item storage section, from the delivery center.
Figure 22 is a flow chart of request operation shown in Figure 21.
Figure 23 is a drawing showing an example of request list.
Figure 24 is a conceptual view showing yet another request operation for downloading of new content items, which are not stored in a content item storage section, from the delivery center.
Figure 25 is a conceptual view of automatic loading of content items.

### BEST MODE FOR CARRYING OUT THE INVENTION

### [First Embodiment]

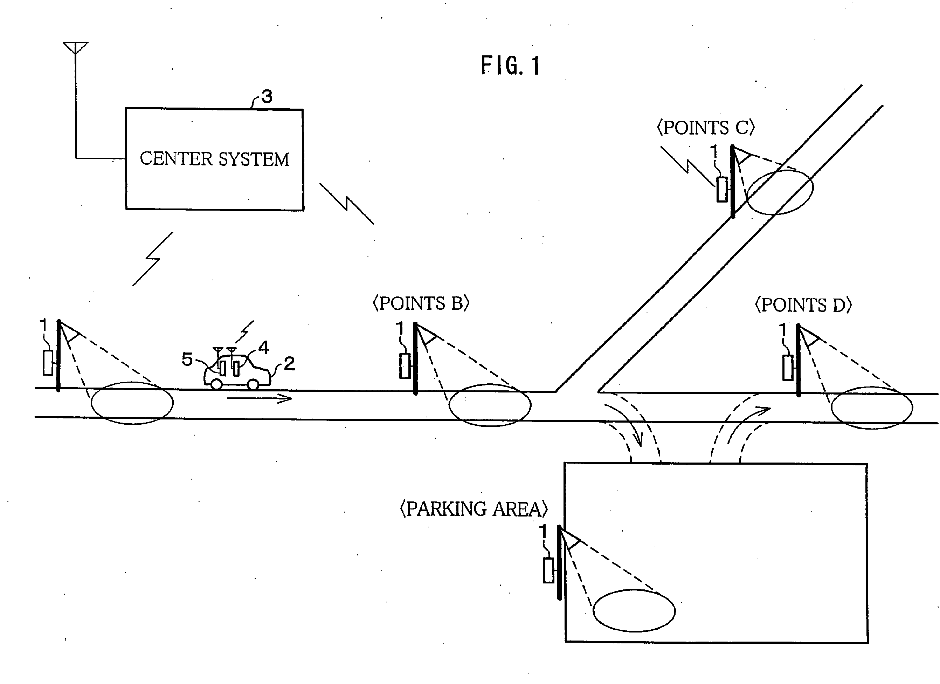

One embodiment of the present invention is described below with reference to Figures 1 through 11. Note that, the present embodiment uses a car navigation device mounted to a vehicle as an information reproduction device of the present invention. To enable itself to reproduce information, the car navigation device uses a communication mode for acquiring information from an information delivery center (center system).

### [Structure of communication system]

As shown in Figure 1, in the information delivery system (communication system) according to the present embodiment, a plurality of DSRC terminal devices (first communication means) 1 are placed at certain intervals on the road where a vehicle (movable body) runs. In Figure 1, the DSRC terminal device 1 is provided also in a parking area.

The DSRC terminal device 1 serves to relay transmission between the center system (information delivery server, communication server) 3 and the vehicle 2. More specifically, the DSRC terminal device 1 performs bidirectional communication with a DSRC radio device (first communication means) 4 provided in the vehicle 2 at or higher than a transmission speed of several Mbps/sec within a limited communication area of several meters to 10 meters around the DSRC terminal device 1, using electric waves of 2.45GHz or 5.8GHz.

Further, when the vehicle 2 wishes to obtain a large amount of information which requires a long communication period for downloading, it is possible if the vehicle stops at a parking area, and carries out communication with the DSRC terminal device 1 provided in the parking area.

Further, in the vehicle 2, a mobile phone 5 is provided as wide range radio communication means in addition to the DSRC radio device 4 serving as short range communication means. The communication device of the present invention is constituted of the DSRC radio device 4 and the mobile phone 5.

The mobile phone 5 enables communication with a radio base station in a wireless zone. In Japanese mobile phone communication, a single cell has a radius of 2kms to several kms. Also, even when the mobile phone moves to another area, the connection is maintained with an automatic searching function.

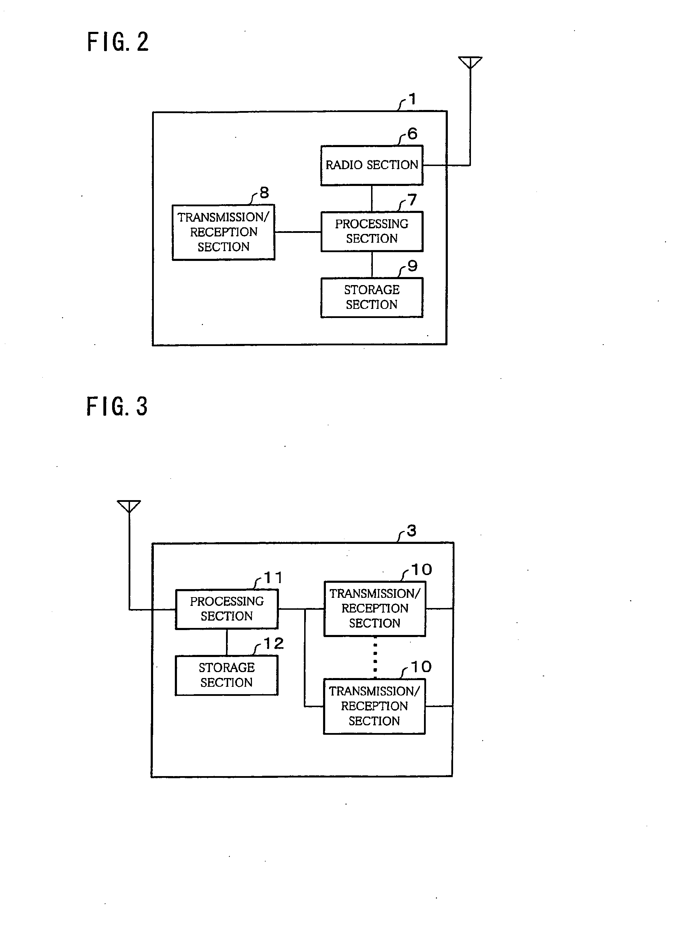

Figure 2 shows a specific structure of a DSRC terminal device 1. As shown in Figure 2, the DSRC terminal device 1 includes a radio section 6, a processing section 7, transmission/reception section 8 and a storage section 9.

The radio section 6 serves to transmit/receive electric waves so as to carry out communication between the DSRC terminal device 1 and the DSRC radio device 4.

The processing section 7 processes the electric wave, which is received from the DSRC radio device 4 by the radio section 6, and transmits the processed wave to the transmission/reception section 8. The processing section 7 also converts the information transmitted from the transmission/reception section 8 into electric waves which is transmitted from the radio section 6 to the DSRC radio device 4.

The transmission/reception section 8 serves to transmit the information, which is processed by the processing section 7 based on the electric wave received from the DSRC radio device 4 by the radio section 6, to the center system 3. The transmission/reception section 8 also transmits the information received form the center system 3 to the processing section 7.

The storage section 9 stores processing results of the processing section 7. For example, the storage section 9 stores ID information for identifying the center system 3 or the DSRC radio device 4, or frequencies of electric waves used for communication.

Further, Figure 3 shows a concrete example of the center system 3. As shown therein, the center system 3 includes a plurality of transmission/reception sections (determination information transmitting means, selecting result receiving means) 10, a processing section (information reproduction mode changing means, determining means, selecting means) 11, a storage section 12 and a radio section 13.

The transmission/reception section 10 serves to carry out transmission/reception with the transmission/reception section 8 of the DSRC terminal device 1. The center system 3 includes a plurality of transmission/reception sections 10 corresponding to the respective transmission/reception section 8 of plural DSRC terminals 1. Further, each transmission/reception section 10 has a general mobile phone communication function, to be capable of transmission/reception of information with the mobile phone 5. The communication between the transmission/reception section 10 and the mobile phone 5 may otherwise be carried out through a base station (not shown).

The processing section 11 serves to process information received by the transmission/reception section 10 to enable the information to be stored into the storage section 12. Further, the processing section 11 processes information stored in the storage section 12 to allow the information to be transmitted to the DSRC terminal device 1 and the mobile phone 5.

The storage section 12 stores processing results of the processing section 11. For example, the storage section 12 stores information received from the DSRC terminal device 1, which has been processed by the processing section 11.

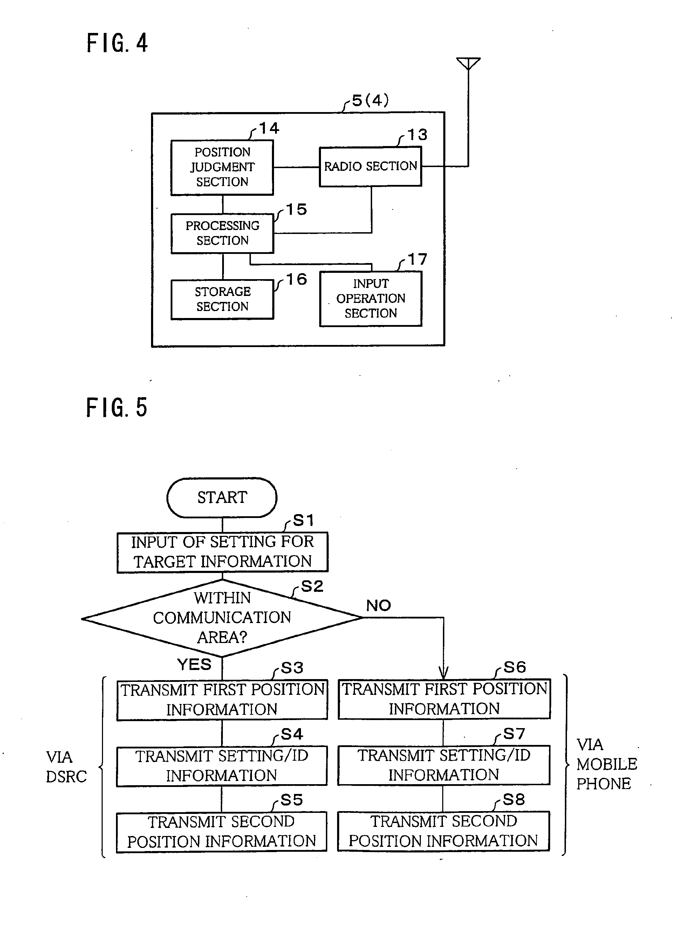

Further, Figure 4 shows a specific structure of a mobile phone 5. As shown in Figure 4, the mobile phone 5 includes a radio section (selection result transmission means) 13, a position determining section 14, a processing section 15, a storage section 16, and an input operation section 17.

The radio section 13 serves to transmit/receive electric waves so as to carry out communication between the mobile phone 5 and the base station.

The position determining section 14 detects the current position of the mobile phone, that is, the current position of the vehicle 2, based on the information provided by the base station. Note that, when the vehicle 2 includes a GPS (Global Positioning System), the position determining section 14 may detect the current position of the mobile phone 5 based on position information provided from the GPS.

The processing section 15 serves to administrate all information processing operations among the processing section 15, the radio section 13, the position determining section 14, the storage section 16 and the input operation section 17.

The storage section 16 stores processing results of the processing section 15. Specifically, the storage section 16 stores position information of the mobile phone 5, or instructions supplied from the user via the input operation section 17.

The input operation section 17 is constituted of various buttons for allowing the user to input commands with respect to the mobile phone 5, a touch panel, etc. The instructions supplied from the user via the input operation section 17 is transmitted to the radio section 13 or the storage section 16 via the processing section 15.

Note that, though Figure 4 shows a structure of mobile phone 5, the DSRC radio device 4 basically has the same structure as that of the mobile phone 5. It however should be noted that, when the DSRC radio device 4 has the structure shown in Figure 4, the DSRC radio device 4 differs from the mobile phone 5 in that the radio section 13 transmits/receives electric waves so as to carry out communication with the DSRC terminal device 1, and the position determining section 14 detects the current position information based on information supplied from the DSRC terminal device 1.

With this arrangement, in the communication system according to the present embodiment, the communication between the DSRC radio device 4 mounted to the vehicle 2 and the center system is carried out via the DSRC terminal device 1, and the communication between the mobile phone 5 and the center system 3 is carried out by a general mobile phone communication function.

### [Operation flow of the communication system]

Next, the following explains operation flow of the communication system according to the present embodiment. First, as shown in Figure 5, the user decides setting of target information with input operation from the input operation section 17 of either the DSRC radio device 4 or the mobile phone 5 provided in the vehicle 2 (Step 1: "Step" is hereinafter referred to as S).

The setting information of the target information or ID information for identifying the user is usually small in amount, and needs to be transmitted quickly; therefore, these information items are transmitted from the mobile phone 5 which is suitable for wide range communication. Meanwhile, when the vehicle 2 happens to be in an communication area with respect to the DSRC terminal device 1, the setting information or the ID information may be transmitted by DSRC communication. In this case, the communication cost can be reduced.

Therefore, first, the processing section 15 of the DSRC radio device 4 carries out judgment as to whether or not the vehicle 2 currently positions in the communication area with respect to the DSRC terminal device 1 (S2). The judgment in S2 is made according to whether or not reception of electric waves from the DSRC terminal device 1 by the radio section 13 of the DSRC radio device 4 is properly performed.

When judgment in S2 found that the vehicle concerned happens to be in the communication area, the first position information, which indicates the current position of the vehicle 2, is transmitted from the position determining section 14 of the DSRC radio device 4 to the DSRC terminal device 1 (S3). Note that, the first position information is obtained by the GPS provided in the vehicle 2.

Thereafter, the setting information indicating the target information having been set by the user in S1, and the ID information for identifying the user are transmitted from the DSRC radio device 4 to the DSRC terminal device 1 (S4). Further, the second position information indicating the current information of the vehicle 2 is transmitted from the position determining section 14 of the DSRC radio device 4 to the DSRC terminal device 1 (S5).

The first position information, the setting information, the ID information, and the second position information, which are transmitted to the radio section 6 of the DSRC terminal device 1 through S3 to S5, are then all transmitted to the transmission/reception section 10 of the center system 3 via the transmission/reception section 8 of the DSRC terminal device 1.

On the other hand, when judgment in S2 found that the vehicle concerned is not in the communication area, the first position information is transmitted from the radio section 13 of the mobile phone 5 to the center system 3 (S6). Thereafter, the setting information indicating the target information having been set by the user in S1, and the ID information for identifying the user are transmitted from the radio section 13 of the mobile phone 5 to the center system 3 (S7). Further, the second position information indicating the current position of the vehicle 2 is transmitted from the radio section 13 of the mobile phone 5 to the center system 3 (S8). The first position information and the second position information are obtained by the position determining section 14 of the mobile phone 5.

As described, in the present embodiment, judgment is carried out in S2 whether or not the vehicle is in the communication area with respect to the DSRC terminal device 1, which allows further judgment as to whether the first position information should be transmitted via the DSRC radio device 4 or via the mobile phone. This judgment allows performing communication with a desirable mode chosen from: (i) the communication with a mobile phone which is suitable for transmission of the first position information having less communication limit in terms of time and position, and (ii) the DSRC communication which can be performed only in a limited area but requires less communication cost.

Further, in the flow chart above, the position information indicating the current position of the vehicle 2 is transmitted to the center system twice, in S3 and S5, or in S6 and S8. However, the position information may be transmitted more than twice at predetermined intervals. The continuous transmission of the position information allows detection of the direction the vehicle head for.

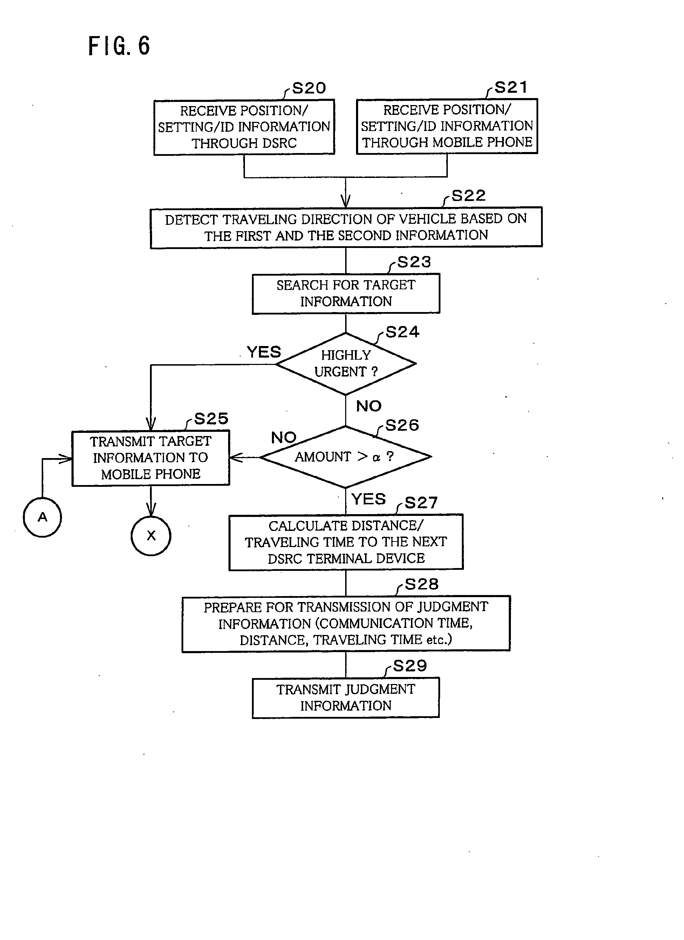

Next, the following explains operation flow of the center system 3 with reference to Figure 6. The transmission/reception sections 10 of the center system 3 receive the position information etc. either via DSRC (S20) or a mobile phone (S21).

Thereafter, in S22, the processing section 11 of the center system 3 finds the traveling direction of the vehicle 2 based on the first position information and the second position information received in S20 or S21. The processing section 11 of the center system 3 then carries out search in the center system 3 for the target information requested by the user based on the setting information received in S20 and S21 (S23).

Then, the processing section 11 of the center system 3 estimates the significance of necessity (urgency, hereinafter) of immediate transmission of the target information to the user (S24). When the urgency is high, the center system 3 transmits the target information to the mobile phone 5 (S25). By thus transmitting the target information via the mobile phone 5 when the urgency is high, it is possible to ensure rapid transmission of target information regardless the time or the current position of the vehicle 2.

On the other hand, when the estimation in S25 found that the urgency is low, the processing section 11 of the center system 3 carries out judgment as to whether or not the data amount of the target information is higher than a predetermined level α (S26).

When the judgment in S 26 found that the data amount of the target information is equal to or lower than the predetermined level α, it can be assumed that the communication time for transmitting the information via the mobile phone 5 will not be very long, meaning that the communication cost will not be too high. With this result, the center system 3 transmits the target information to the mobile phone 5 (S25). By thus transmitting the target information via the mobile phone 5 when the judgment in S26 found that the data amount of the target information is equal to or lower than the predetermined level α, it is possible to rapidly transmit the target information.

On the other hand, when the judgment in S26 found that the data amount of the target information is higher than the predetermined level α, the processing section 11 of the center system 3 calculates the distance from the vehicle 2 to a DSRC terminal device nearest the vehicle, or time that the vehicle 2 takes to reach the nearest DSRC terminal device 1, based on the current position information of the vehicle 2 (S27). Note that, in S27, the processing section 11 may calculate required communication time when the target information is transmitted via the mobile phone 5, based on the amount of target information and the communication speed of mobile phone. In calculation of the time the vehicle 2 takes to reach the nearest DSRC terminal device 1, it may be performed based on the average speed of the vehicle if either the speed data of vehicle, or the speed information, which is obtained through the traffic sensor provided on the road, can be obtained.

Then, in 28, the processing section 11 of the center system 3 converts the calculation results in S27, which are the distance and the time to get to the nearest DSRC terminal device 1, into determination information, in addition to the amount of the target information and the communication time. The determination information is used as reference to decide whether or not the transmission is performed with a mobile phone 5. After S28, the center system 3 transmits the determination information to the mobile phone 5 via the transmission/reception section 10 (S29).

Note that, the determination information transmitted in S29 may include information regarding fee of the target information. With this option, it is possible to provide more accurate judgment material by which the user decides whether or not he/she receives the target information via DSRC communication.

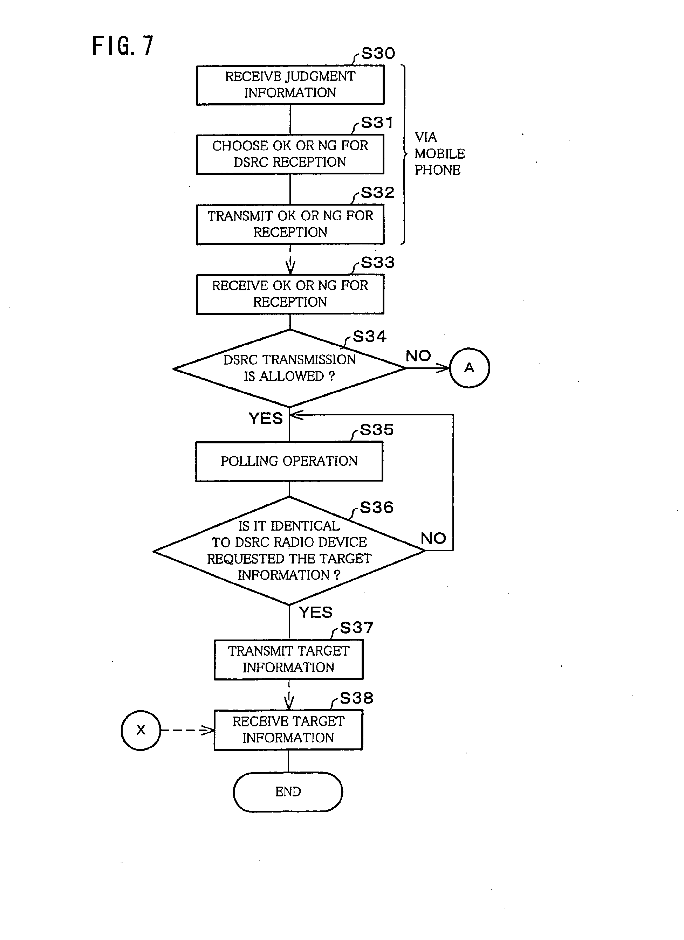

Thereafter, as shown in Figure 7, the determination information transmitted in S29 is received in the mobile phone 5 through the radio section 13 (S30). Then, the user decides whether or not he/she receives the target information via DSRC communication (S31). Further, the use input through the input operation section 17 either "OK" or "NG", which is transmitted from the radio section 13 (S32).

Thereafter, the answer for reception, "OK" or "NG", which is transmitted in S32, is received by the transmission/reception sections 10 of the center system 3 (S33). Then, the processing section 11 of the center system 3 makes a decision as to whether or not the transmission can be performed via DSRC (S34) based on the answer; when the DSRC transmission is allowed, the processing section 11 performs polling operation (S35).

After the communication between the DSRC terminal device 1 and the DSRC radio device 4 in the vehicle 2 is established as a result of polling operation in S35, the DSRC terminal device 1 carries out judgment as to whether or not the DSRC radio device 4 in the receiving end is identical to the DSRC radio device 4 supposed to receive the target information (S36).

The following describes one example of judgment in S36. The ID information of the DSRC radio device 4 is transmitted from the DSRC radio device 4 to the center system 3 through the DSRC terminal device 1. As described, the ID information of mobile phone 5 has already been transmitted to the center system 3 in S21.

Therefore, the ID information of mobile phone 5 from which the answer (OK or NG) was transmitted is compared with the ID information of the DSRC radio device 4, so as to carry out the judgment as to whether or not the DSRC radio device 4 in the receiving end is identical to the DSRC radio device 4 supposed to receive the target information.

Otherwise, the judgment in S36 may be carried out as follows. When the answer ("OK" or "NG") for DSRC transmission is sent in S32, ID information of the vehicle, which is supposed to receive the target information, is also sent from the mobile phone 5. In the meantime, each DSRC terminal device 1 constantly checks the ID information of vehicle in the other end of DSRC communication. Then, the judgment in S36 may be performed by confirming accordance of the ID information transmitted from the mobile phone 5 with the ID information of the vehicle checked by the DSRC terminal device 1.

When the judgment in S36 found that the DSRC radio device 4, which is supposed to receive the target information, is ready for communication, the target information is transmitted via DSRC (S37).

As described, the vehicle 2 receives the target information via either DSRC or mobile phone 5 (S38), this is the end of the operation of communication system according to the present embodiment.

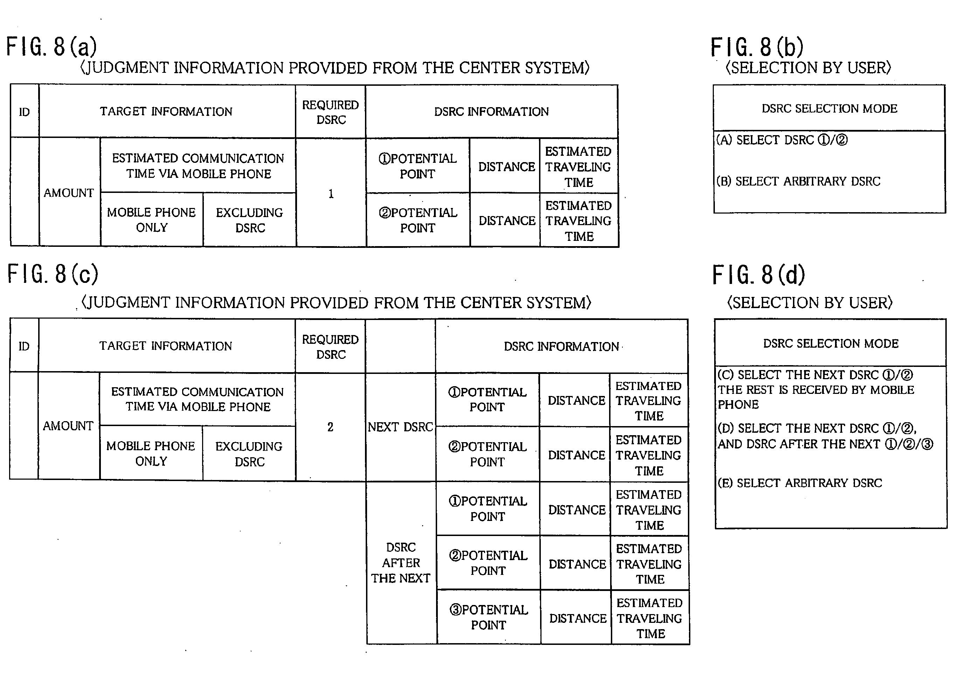

Note that, when the information amount of the target information is too large, a single DSRC terminal device 1 may not be able to complete transmission of target information. To deal with this, as shown in Figure 8(a), the determination information may be composed of the information regarding the target information, information regarding required number of DSRC, and information of DSRC.

The information regarding the target information includes the amount of target information, and estimated communication time in the case of transmitting all of unsent part of target information (unsent target information, hereinafter) via mobile phone when transmission of the target information is not completed by a single DSRC terminal device 1, and estimated communication time of the mobile phone 5 in the case of transmitting the unsent target information via the mobile phone 5 and DSRC communication.

Further, information regarding the required number of DSRC is the number of DSRC terminal devices 1 required for transmission of the unsent target information via DSRC communication. Further, the DSRC information also includes the potential location of DSRC terminal device 1 for the next DSRC communication, the distance to the location, and estimated traveling time. Note that, Figure 8(a) shows a case of having two potential DSRC terminal devices (DSRC terminal devices (i) and (ii)) for the next DSRC communication.

When the determination information shown in Figure 8(a) is transmitted, as shown in Figure 8(b), the user arbitrarily selects, as the DSRC terminal device for next communication, one of: a mode (A) of using either of DSRC terminal devices (i) and (ii), and a mode (B) of using neither DSRC terminal device (i) nor (ii) but another DSRC terminal device.

As described, by including information of potential DSRC terminal device in the determination information transmitted from the center system 3, the user is able to make appropriate selection of the most desirable DSRC terminal device based on the information of potential terminal devices.

Further, as shown in Figure 8(c), when the required number of DSRC information is "2", DSRC information includes potential DSRC terminal device (DSRC terminals device(i), (ii)) for the next DSRC communication, and potential DSRC terminal device (DSRC terminal devices (i), (ii), (iii)) for DSRC communication after the next.

When the determination information shown in Figure 8(c) is transmitted, as shown in Figure 8(d), the user arbitrarily selects one of: a mode (C) of using both of the DSRC terminal devices (i) and (ii) in the next communication and the rest of information is received by the mobile phone 5; a mode (D) of using either of the DSRC terminal devices (i) and (ii) in the next communication and either of the DSRC terminal devices (i), (ii) and (iii) in the communication after the next; and a mode (E) of using any desired DSRC terminal devices.

Note that, in the example above, two DSRC terminal devices are required to transmit all of unsent target information via DSRC communication; however, even when 3 or more DSRC terminal devices are required, the DSRC information contained in the determination information allows the user to make appropriate selection of the most desirable DSRC terminal device.

### (Reservation of DSRC terminal device)

Next, the following explains operation flow in the communication system according to the present embodiment in the case of receiving the target information by a DSRC terminal device 1 provided in a specific place, such as a parking area.

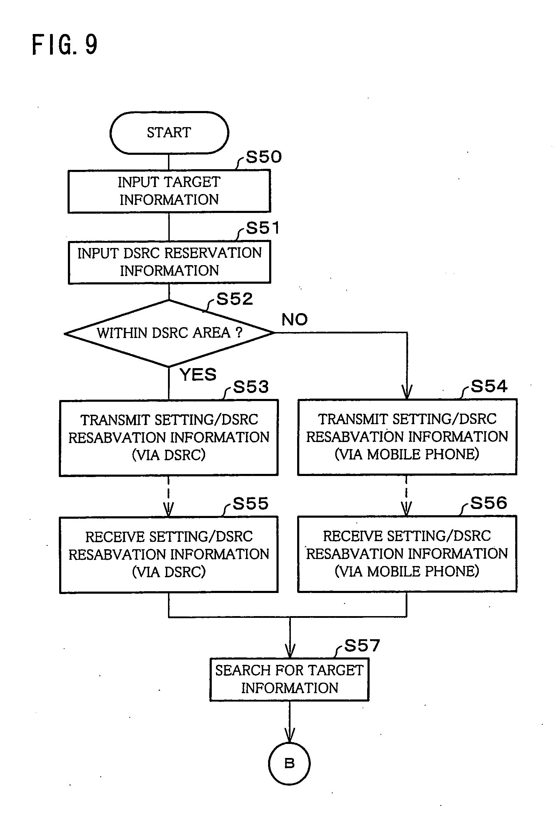

As shown in Figure 9, through the input operation section 17 of the DSRC radio device 4 or the mobile phone 5 of the vehicle 2, the user inputs setting of target information (S50).

Thereafter, the user inputs DSRC reservation information through the input operation section 17 (S51). The "DSRC reservation information" refers to information to reserve a DSRC terminal device when using the DSRC terminal device in a specific place for reception of the target information.

Next, the processing section 15 of the DSRC radio device 4 carries out judgment as to whether or not the vehicle 2 currently positions in the communication area with respect to the DSRC terminal device 1 (S52). When the judgment in S52 found that the vehicle 2 is currently in the communication area with respect to the DSRC terminal device 1, the DSRC radio device 4 transmits setting information for enabling the center system 3 to select target information, and the DSRC reservation information through the DSRC terminal device 1 (S53).

On the other hand, when the judgment in S52 found that the vehicle 2 is not in the communication range with respect to the DSRC terminal device 1, the setting information and the DSRC reservation information are transmitted from the DSRC radio device 4 by using the mobile phone 5 via the DSRC terminal device 1 (S54). Note that, though it is omitted in Figure 9, other information items, such as position information or ID information of user, are also transmitted in S53 or S54, in addition to the setting information and the DSRC reservation information.

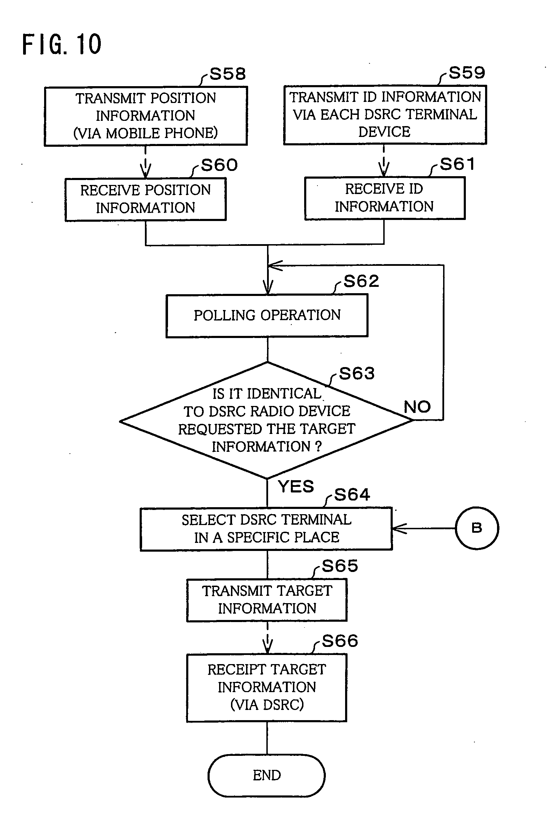

Further, as shown in Figure 10, the position information of vehicle 2 is transmitted from the mobile phone 5 (S58). Meanwhile, the ID information of each DSRC radio device 4 is transmitted when the DSRC radio device 4 passes through a communication area with respect to the DSRC terminal device 1 (S59).

Meanwhile, each transmission/reception section 10 of the center system 3 receives the position information having been sent in S58 (S60), and the ID information having been sent in S59 (S61). Thereafter, the processing section 11 of the center system 3 carries out polling operation (S62).

After the communication between the DSRC terminal device 1 and the DSRC radio device 4 in the vehicle 2 is established as a result of polling operation in S62, the DSRC terminal device 1 carries out judgment as to whether or not the DSRC radio device 4 in the receiving end is identical to the DSRC radio device 4 supposed to receive the target information (S63). This judgment in S63 may be carried out by the same manner as that in S36 (Figure 7).

When the judgment in S63 found that the DSRC radio device 4 in the receiving end is identical to the DSRC radio device 4 supposed to receive the target information, the processing section 11 of the center system 3 selects a DSRC terminal device 1 in a specific place based on the DSRC reservation information received in S55 and S56 (Figure 9) as the DSRC terminal device 1 for transmitting the target information. Then, the center system 3 transmits the target information found in S57 (Figure 9) through the DSRC terminal device 1 selected in S64 (S65).

Then, on reception of the target information, which is transmitted in S65, by the DSRC radio device 4 through the DSRC terminal device 1 in a specific place (S66), the series of operation flow is finished.

### [The method based on plural judgment factors]

However, in the embodiment above, the judgment as to which one of mobile phone and DSRC should used for transmission of the target information is made by the user based on the amount of target information or urgency; however, the present invention is not limited to this. For example, a determination reference table (minutely described below) may be prepared in the center system 3 in advance, allowing automatic determination of one of the mobile phone and DSRC in the center system 3.

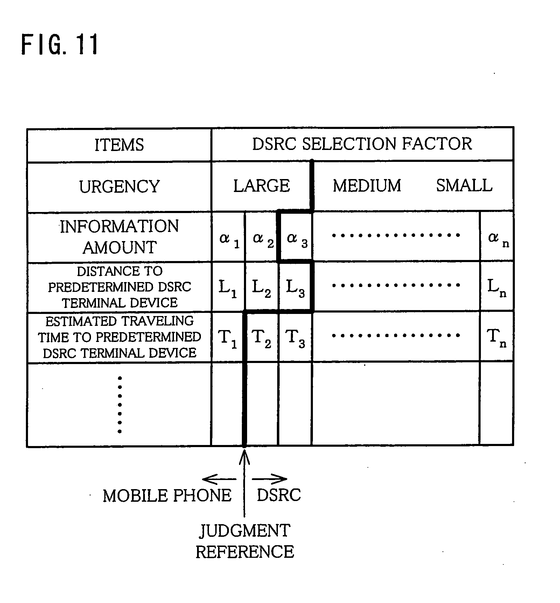

As shown in Figure 11, the determination reference table has specific classification of various determination factors as determination reference, such as urgency of target information, amount of target information, distance to the predetermined DSRC terminal device, and estimated time to get to the predetermined DSRC terminal device.

The determination reference table classifies the levels of urgency (classified by a thick solid line in the figure) so that highly-urgent target information is transmitted via a mobile phone, and less urgent or not urgent target information is transmitted via DSRC.

Further, as to the factor of "information amount", the determination reference table classifies the degree of amount so that, when a target information amount is equal to or less than α2 the target information is transmitted via a mobile phone, and when the target information amount is equal to or larger than α3, the target information is transmitted via DSRC. Here, αi < αi + 1 (i is an integer from 1 to n).

Further, as to the factor of "distance to the predetermined DSRC terminal device", the determination reference table classifies the degrees of distance so that, when the distance is equal to or more than L3, the target information is transmitted via a mobile phone. Here, Li > Li + 1 (i is an integer from 1 to n).

Further, as to the factor of "time to get to the predetermined DSRC terminal device", the determination reference table classifies degrees of time so that, when the estimated time to get to the predetermined DSRC terminal device is equal to or more than T1, the target information is transmitted via a mobile phone, and when the estimated time to get to the predetermined DSRC terminal device is equal to or less than T2, the target information is transmitted via DSRC. Here, Ti > Ti + 1 (i is an integer from 1 to n).

As described, the determination reference table offering determination reference for each factor in deciding whether the transmission of target information is carried out via DSRC or mobile phone is provided in the processing section 11 (see Figure 3) of the center system 3. With this arrangement, the step for transmitting determination information (S29) in the flow chart of Figure 6 can be omitted, thereby simplifying the operation in the center system 3.

Note that, the described determination reference may be previously created as recommendation in the center system 3 in consideration of communication cost etc.; otherwise, the user may create the reference by his/her own decision. Further, when the determination reference is previously created as recommendation in the center system 3, the center system 3 may first obtain approval from the user for the use of determination reference, before selecting the transmission mode based on the determination reference.

As described, the communication system according to the present embodiment includes the DSRC terminal device 1 which allows communication between the vehicle 2 in the first communication area and the center system 3; the DSRC radio device 4; and the mobile phone which allows communication between the vehicle 2 in the second communication area, which is larger than the first communication area, and the center system 3, wherein the user of the vehicle 2 estimates the level of attribute information of the target information which the user wishes to obtain from the center system 3, the system further including a processing section for selecting either DSRC communication or mobile phone as transmission mode of the target information to the vehicle 2, based on estimation (determination) information of the processing section 11.

Further, the communication system according to the present embodiment includes the processing section 11 for determining the level of attribute information of the target information which the user wishes to obtain from the center system 3; the transmission/reception section 10 for transmitting the determination information of the processing section 11 to the vehicle 2 either via DSRC communication or via a mobile phone; and the radio section 13 for transmitting decision of the user as to whether the target information is obtained through DSRC or mobile phone, which decision is made based on the determination information transmitted from the transmission/reception section 10, wherein the processing section 11 makes a decision as to whether the target information is transmitted to the vehicle 2 via DSRC or via mobile phone based on the determination result transmitted from the radio section 13.

The effect of the foregoing communication system may also be obtained by the communication control method in which the user of the vehicle 2 makes a decision as to whether the target information is transmitted to the vehicle 2 via DSRC communication or via mobile phone, based on the level of attribute information of the target information which the user wishes to obtain from the center system 3.

Further, the effect of the foregoing communication system may also be obtained by the communication control method in which the center system 3 determines the level of attribute information of the target information which the user of vehicle 2 wishes to obtain from the center system 3, and transmits the determination as determination information to the vehicle 2 either via DSRC communication or via a mobile phone, and the user makes a decision as to whether the target information is obtained through DSRC or mobile phone, which decision is made based on the determination information, and then the determination result is transmitted to the center system 3 where the final determination as to whether the target information is transmitted to the vehicle 2 via DSRC or via mobile is made.

Further, the communication control method may be structured as a program executed by a computer. In this case, the communication control program is stored in a medium, such as a floppy disk®, a hard disk, a magnetic tape, an optical disk, a magnetic disk, a magnetooptical disk, an MD etc., or in a storage medium, such as ROM, RAM, or the like; the program is read out from the medium by a computer for execution.

### [Application examples of the communication system according to the present embodiment]

The following explains several application examples of the communication system according to the present embodiment.

### 1. Application example in petrol station

The following explains an application example of the present invention in a petrol station. When a DSRC terminal device is provided in a petrol station where the vehicle needs to stop for refuel, maintenance etc., information delivery to the vehicle in the petrol station can be easily carried out via DSRC communication.

Thus, the DSRC terminal device in the petrol station allows any users who stop by the petrol station to effectively use their waiting time during refuel, maintenance etc. for acquisition of desired information from the DSRC terminal device. Further, the owners of petrol stations are also able to obtain information about the user via DSRC communication using the DSRC radio device, allowing them to use the information for marketing.

For example, maintenance history, usage history for the petrol station etc. of the vehicle may be stored in the DSRC radio device to enable the owner to obtain these histories via DSRC communication while the vehicle is refueled in the petrol station. Such history data allows the owner of the petrol station to offer the most suitable service to the driver of the vehicle. Further, the driver of vehicle will appreciate appropriate advices in vehicle maintenance etc., and would become more willing to use the petrol station.

Further, the owner may give some kind of amenity to the user who uses the DSRC terminal device to obtain desired information via DSRC communication in the petrol station. This is effective to increase the frequency of visit, and also to increase user's satisfaction. The amenity may be discount on petrol or other various services (car wash, oil exchange etc.).

### 2. Application example in parking area

The following explains an application example of the present invention in a parking area of a department store, a supermarket or the like. When a DSRC terminal device is provided in a parking area, information delivery via DSRC communication can be easily performed by the vehicle stopped in the parking area.

Thus, the DSRC terminal device in the parking area allows any users who use the parking area to effectively use the parking time by obtaining desired information from the DSRC terminal device. Besides, when the parking area is full, the DSRC terminal device allows the drivers who are waiting in a line outside the parking area to obtain desired information via DSRC communication. This will contribute to reduce irritation of the drivers from waiting.

Meanwhile, the owners of parking area are able to obtain information about the user via DSRC communication using the DSRC radio device, allowing them to use the information for marketing. For example, the usage history for the parking area of the vehicle may be stored in the DSRC radio device to enable the owner to obtain the history via DSRC communication while the vehicle is stopped in the parking area. Such history data allows the owner of the parking area to offer some special services to the driver, for example, offering discount on parking fee after a certain number of utilizations.

Further, the DSRC terminal device in the parking area may be associated with a personal computer inside the shop storing client data, so that the owner is able to obtain/update shopping history of the user for the shop, or service history given to the user. Such history data allows the owner of the department store, supermarket etc. to offer the more appropriate service to the user of the vehicle. Further, the user of vehicle will appreciate superior services in the parking area which has DSRC communication service, and would become more willing to more frequently use the parking area.

Further, by setting the DSRC terminal device in the parking area of each of chain stores, the following service is possible. The DSRC radio device stores the number of visits of the user for one of the shops, and the owner obtains this visiting history while the user is parking the car. Then, the owner may offer some kind of amenity, for example, discount on commodity, to the user who has visited one of the shops more than a certain number of times, the amenity may be otherwise music data, image data such as movies etc.

### [Summary of the present embodiment]

As described, an information delivery system according to the present invention is arranged so that an information reproduction device reproduces information delivered from an information delivery center, the information delivery system comprising information reproduction mode changing means for changing reproduction mode for the information based on circumstances on information reproduction in the information reproduction device.

Particularly, in the present embodiment, the information delivery system as set forth in claim 1, further comprises first communication means for enabling communication between a mobile body and the information delivery center, the mobile body including the information reproduction device and residing in a first communication area; and second communication means for enabling communication between the mobile body and the information delivery center when the mobile body resides in a second communication area which is larger than the first communication area, the second communication means carrying out communication with a higher speed than the first communication means, wherein: the information reproduction mode changing means includes: determining means for determining a level of attribute information of target information, which is selected by a user of the mobile body and is to be delivered from the information delivery center; and selecting means for selecting either the first communication means or the second communication means to be used for delivery of the target information to the information reproduction device, based on a determination result of the determining means.

If the information delivery system according to the present invention is expressed as a communication system, the communication system further comprises first communication means for enabling communication between a mobile body and the center system, the mobile body residing in a first communication area; and second communication means for enabling communication between the mobile body and the center system when the mobile body resides in a second communication area which is larger than the first communication area, the first communication means carrying out communication with a higher speed than the second communication means, the communication system further including determining means for determining a level of attribute information of target information, which is selected by a user of the mobile body and is to be delivered from the center system; and selecting means for selecting either the first communication means or the second communication means to be used for delivery of the target information based on a determination result of the determining means.

With this arrangement, the determining means determines a level of attribute information of target information, and the selecting means selects either the first communication means or the second communication means to be used for delivery of the target information to the mobile body based on the determination result of the determining means. On this account, the user does not need to select the communication means, and is able to obtain the target information via the communication means selected by the selecting means, only by requesting acquisition of the target information to the information delivery center.

Here, the first communication means carrying out communication with a higher speed than the second communication means, while the second communication means enables communication in a second communication area which is larger than the first communication area. Further, selecting means selects either the first communication means or the second communication means based on the determination result of the determining means.

Therefore, in the present invention, when the determining means determines, based on the level of attribute information of the target information, it is necessary to transmit the target information to the mobile body in a short time by taking advantage of the first communication means, the selecting means is arranged to select the first communication means. With this arrangement, it is possible to further reduce the time for transmitting the target information to the mobile body.

Further, in the present invention, when the determining means determines, based on the level of attribute information of the target information, it is necessary to transmit the target information to the mobile body immediately by taking advantage of the second communication means, the selecting means is arranged to select the second communication means. With this arrangement, it is possible to transmit the target information to the mobile body for a wider area.

Accordingly, the present invention realizes an information delivery system taking advantages of both the first communication means allowing high-speed communication and the second communication means allowing wide-area communication. Therefore, the present invention increases user friendliness in obtaining target information from the information delivery system.

Further, it is preferable that the selecting means carries out the selecting using a determination reference table in which a level of attribute information and communication means to be used for transmission of the target information are related with each other previously.

With this arrangement, the selecting means automatically selects one of the first communication means and the second communication means to be used for delivery of the target information, based on the determination reference table. With this function, the user can omit the selecting operation for the communication means.

Therefore, the present invention further increases user friendliness in obtaining target information from the information delivery system.

Further, the information delivery system according to the present invention further comprises: first communication means for enabling communication between a mobile body and the information delivery center, the mobile body including the information reproduction device and residing in a first communication area; and second communication means for enabling communication between the mobile body and the information delivery center when the mobile body resides in a second communication area which is larger than the first communication area, the second communication means carrying out communication with a higher speed than the first communication means, wherein: the information reproduction mode changing means includes: determining means for determining a level of attribute information of target information, which is selected by a user of the mobile body and is to be delivered from the information delivery center; determination information transmitting means for transmitting determination information, which is a determination result of the determining means, to the mobile body via either the first communication means or the second communication means; selecting result transmitting means for transmitting to the information delivery center a selecting result made by the user as to which of the first communication means and the second communication means is used for obtaining the target information, which result is made based on the determination information transmitted from the determination information transmitting means; and selecting means for selecting either the first communication means or the second communication means to be used for delivery of the target information to the mobile body based on the selecting result transmitted from the selecting result transmitting means.

If the information delivery system according to the present invention is expressed as a communication system, the communication system further comprises: first communication means for enabling communication between a mobile body and the information delivery center, the mobile body including the information reproduction device and residing in a first communication area; and second communication means for enabling communication between the mobile body and the information delivery center when the mobile body resides in a second communication area which is larger than the first communication area, the first communication means carrying out communication with a higher speed than the second communication means, the communication system further including determining means for determining a level of attribute information of target information, which is selected by a user of the mobile body and is to be delivered from the information delivery center; determination information transmitting means for transmitting determination information, which is a determination result of the determining means, to the mobile body via either the first communication means or the second communication means; selecting result transmitting means for transmitting to the information delivery center a selecting result made by the user as to which of the first communication means and the second communication means is used for obtaining the target information, which result is made based on the determination information transmitted from the determination information transmitting means; and selecting means for selecting either the first communication means or the second communication means to be used for delivery of the target information to the mobile body, based on the selecting result transmitted from the selecting result transmitting means.

With this arrangement, the user selects one of the first communication means and the second communication means to be used for obtaining the target information based on the determination information transmitted from the determination information transmitting means, and transmits the selection result to the information delivery center via the selecting result transmitting means. Then, the information delivery center selects either the first communication means or the second communication means based on the selecting result, and transmits the target information via the selected communication means to the mobile body.

With this arrangement, the information delivery system according to the present invention, on transmission of the target information, selects either the first communication means or the second communication means based on the selecting result of the user. On this account, it is possible to carry out transmission of the target information according to user's request.

Further, the present invention realizes a communication system taking advantages of both the first communication means allowing high-speed communication and the second communication means allowing wide-area communication. Therefore, the present invention increases user friendliness in obtaining target information from the information delivery system.

Further, the information delivery system is preferably arranged so that the determination information transmitting means transmits the determination information by the second communication means.

With this arrangement, since the determination information is transmitted to the mobile body via the second communication means, it is possible to transmit the target information to the mobile body for a wider area. On this account, this information delivery system securely meeting user's request can be provided to a wider range of user.

Further, in the foregoing information delivery system, the attribute information may be urgency of transmission of the target information. Note that, "urgency" here means the allowable interval from the determination of level of attribute information of target information by the determining means to the beginning of transmission of target information to the mobile body. For example, if the target information needs to be transmitted immediately after the request by the user, the "urgency" for the information is high.

With this arrangement, level of attribute information, i.e., necessity of immediate transmission of target information to the mobile body, is estimated by the determining means. Accordingly, when the determining means determines that the target information needs to be immediately transmitted to the mobile body, the selecting means selects the second communication means by which transmission of target information to a mobile body can be performed for a wider communication area.

Therefore, the present invention increases user friendliness in obtaining target information from the information delivery system.

Further, the attribute information may be a data amount of the target information.

With this arrangement, the level of attribute information, i.e., the data size of target information can be estimated by the determining means. On this account, when the determining means determines that the data size of target information is large, the selecting means selects the first communication means by which transmission of target information to a mobile body can be performed in a shorter communication time than second communication means.

Therefore, the present invention increases user friendliness in obtaining target information from the information delivery system.

Further, the attribute information may be time needed for transmission of the target information via either the first communication means or the second communication means.

With this arrangement, the level of attribute information, i.e., time needed for transmission of the target information can be found by the determining means. On this account, the selecting means selects either of the first communication means or the second communication means according to the transmission time estimated by the determining means. For example, when the time taken for transmission of target information by the second communication means is in an allowable range set by the user, the transmission to the mobile body is performed in a wider range by using the second communication means instead of the first communication means.

Therefore, the present invention increases user friendliness in obtaining target information from the information delivery system.

Further, it is preferable that the second communication means is wireless telephone communication.

With this arrangement using wireless mobile phone communication as the second communication means, transmission of target information to the mobile body is performed via a PHS or a mobile phone which is now widely used. More specifically, by using of widely-spread PHS or mobile phone as the second communication means instead of establishing new communication mode, the information delivery system of the present invention can be realized at a lower cost.

Further, it is preferable that the wireless telephone communication is a mobile phone communication.

With this arrangement in which the second communication means is realized by a mobile phone communication, which is currently the most popular wireless communication mode, being available in the most regions in Japan, the transmission of target information to the mobile body can be performed with almost no geographical limit.

Further, it is preferable that the first communication means is DSRC communication.

With this arrangement in which the first communication means is realized by DSRC communication, which is fast-developing communication mode in recent years, a large amount of target information can be rapidly and reliably transmitted and received at a low cost. In this way, benefits of DSRC communication can be used when transmission is performed by the first communication means.

Further, in the foregoing information delivery system, it is preferable that selecting means selects the first communication means to be used for transmission of the target information to the mobile body, and reserves a DSRC terminal device used for the transmission of the target information before the transmission.

With this arrangement, the selecting means reserves a DSRC terminal device used for the transmission of the target information, before the transmission is started. Therefore, transmission of target information can be immediately performed as soon as the mobile body arrives at the communication area for the DSRC terminal device. Therefore, the present invention increases user friendliness in obtaining target information from the information delivery system.

Further, in the foregoing information delivery system, it is preferable that the attribute information is a distance from the mobile body to a DSRC terminal device nearest the mobile body.

With the foregoing arrangement, the determining means finds the distance to the nearest DSRC terminal device, in other words, the determining means finds whether the mobile body is in a communication area for DSRC. Accordingly, when the determining means finds that mobile body is in an area for DSRC communication, the target information can be transmitted through DSRC communication, thereby reducing communication cost.

Further, in the foregoing information delivery system, it is preferable that the attribute information is a time that the mobile body takes to reach a communication area for the nearest DSRC terminal device.

With the foregoing arrangement, the determining means determines the level of attribute information by finding the time that the mobile body takes to reach the communication area for the DSRC device nearest the mobile body. Accordingly, if it is found, based on the time needed for the mobile body to start DSRC communication, that the target information can be transmitted to the mobile body more rapidly by the second communication means than DSRC communication, the selecting means selects the second communication means. In this way, it is possible to increase user friendliness in obtaining target information from the information delivery system.

Further, an information acquisition device according to the present invention comprises first communication means for enabling communication between the information delivery center and a mobile body which resides in a first communication area; and second communication means for enabling communication between the information delivery center and the mobile body which resides in a second communication area larger than the first communication area, wherein the first communication means carries out communication with a higher speed than the second communication means, wherein: a user of the mobile body transmits setting information for specifying target information, which is information the user wishes to obtain from the information delivery center, the setting information being transmitted via either the first communication means or the second communication means, and the user obtains the target information via either the first communication means or the second communication means, which is selected by the information delivery center based on the setting information.

Further, an information acquisition device according to the present invention comprises first communication means for enabling communication between the information delivery center and a mobile body which resides in a first communication area; and second communication means for enabling communication between the information delivery center and the mobile body which resides in a second communication area larger than the first communication area, wherein the first communication means carries out communication with a higher speed than the second communication means, wherein: a user of the mobile body transmits setting information which specifies target information the user wishes to obtain from the information delivery center, the setting information being transmitted via either the first communication means or the second communication means, the user receives from the information delivery center determination information for a level of attribute information of the target information, which level is determined by the information delivery center based on the setting information; and the user selects either the first communication means or the second communication means to be used for obtaining the target information, based on the determination information.

Further, an information delivery server according to the present invention performs communication with a mobile body residing in a first communication area via first communication means, and performs communication with the mobile body residing in a second communication area, which is larger than the first communication area, via second communication means, the first communication means carrying out communication with a higher speed than the second communication means. The information delivery server comprises: determining means for determining a level of attribute information of target information the user wishes to obtain; and selecting means for selecting either the first communication means or the second communication means to be used for delivery of the target information to the mobile body, based on a determination result of the determining means.

Further, an information delivery server according to the present invention performs communication with a mobile body residing in a first communication area via first communication means, and performs communication with the mobile body residing in a second communication area, which is larger than the first communication area, via second communication means, the first communication means carrying out communication with a higher speed than the second communication means. The information delivery server comprises: determining means for determining a level of attribute information of target information the user wishes to obtain from the information delivery center; determination information transmitting means for transmitting determination information, which is a determination result of the determining means, to the mobile body via either the first communication means or the second communication means; selecting result receiving means for receiving from the mobile body a selecting result made by the user as to which of the first communication means and the second communication means is used for obtaining the target information, which result is made based on the determination information transmitted from the determination information transmitting means; and selecting means for selecting either the first communication means or the second communication means to be used for delivery of the target information to the mobile body, based on the selecting result received by the selecting result receiving means.

By using the information acquisition device (communication device) with the foregoing information delivery server (communication server), it is possible to ensure the same effect as that of the foregoing information delivery server.

Further, an information delivery control method according to the present invention is used for an information delivery system comprising first communication means for enabling communication between an information delivery center and a mobile body which resides in a first communication area; and second communication means for enabling communication between the information delivery center and the mobile body which resides in a second communication area larger than the first communication area, wherein the first communication means carries out communication with a higher speed than the second communication means. The method comprises the step of: selecting either the first communication means or the second communication means to be used for transmission of target information which the user wishes to obtain from the information delivery center, based on a level of attribute information of the target information.

With the foregoing arrangement, either the first communication means or the second communication means is selected to be used for transmission of target information to the mobile body based on a level of attribute information of the target information. On this account, the user does not need to select the communication means, and is able to obtain the target information via the communication means selected by the information control method of the present invention, only by requesting acquisition of the target information to the information delivery center.

Accordingly, the present invention realizes an information delivery system taking advantages of both the first communication means allowing high-speed communication and the second communication means allowing wide-area communication. Therefore, the present invention increases user friendliness in obtaining target information from the information delivery center

Further, an information delivery control method according to the present invention is used for an information delivery system comprising first communication means for enabling communication between an information delivery center and a mobile body which resides in a first communication area; and second communication means for enabling communication between the information delivery center and the mobile body which resides in a second communication area larger than the first communication area, wherein the first communication means carries out communication with a higher speed than the second communication means The method comprising the steps of: determining in the information delivery center a level of attribute information of target information, which a user of the mobile body wishes to obtain from the information delivery center, and transmitting determination, which is as a determination result, to the mobile body via either the first communication means or the second communication means; and transmitting to the information delivery center a selecting result made by the user as to which of the first communication means and the second communication means is used for obtaining the target information, which result is made based on the determination information transmitted from the determination information transmitting means, and selecting either the first communication means or the second communication means to be used for delivery of the target information to the mobile body, based on the selecting result.

With this arrangement, the information delivery system according to the present invention, on transmission of the target information, selects either the first communication means or the second communication means based on the selecting result of the user. On this account, it is possible to carry out transmission of the target information according to user's request.

Further, with the foregoing arrangement, the present invention realizes an information delivery system taking advantages of both the first communication means allowing high-speed communication and the second communication means allowing wide-area communication. Therefore, the present invention increases user friendliness in obtaining target information from the information delivery system.

Further, an information delivery control program according to the present invention causes a computer to execute the foregoing information delivery control method.

By loading the information delivery control program (communication control program) into a computer system, the foregoing information delivery control method can be enforced.

Further, a computer-readable storage medium according to the present invention stores the foregoing information delivery control program.

By loading the program stored in the foregoing storage medium into a computer system, the foregoing information delivery control method can be enforced.

### [Second Embodiment]

The following minutely describes another embodiment of the present invention. In the present embodiment, the information reproduction device according to the present invention is realized by a content item reproduction terminal. Further, in the reproduction of information, transmission of event information (described later) is also performed. Further, the content item reproduction terminal is capable of setting contents or reproduction order of the content items reproduced therein.

It should be noted that, unless otherwise specified, the sizes, materials, shapes or relative positions of respective components of the device described in the present embodiment are merely examples, and the present invention is not limit to those values.

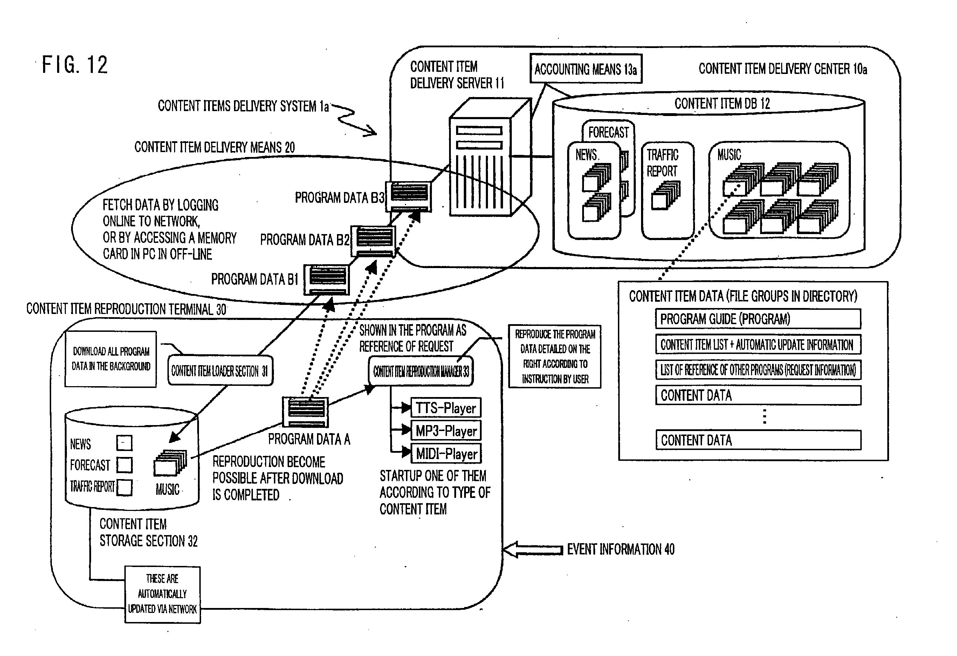

Figure 12 is a schematic diagram of a content item delivery system (information delivery system) 1a according to the present embodiment. The content item delivery system 1a includes a content item delivery center 10a as the information provider, and a plurality of content item reproduction terminals 30 as the information receivers. The content item reproduction terminals 30 are connected to the content item delivery center 10a via the content item delivery means 20. More specifically, each content item reproduction terminal 30, constantly or as required, receives delivery of newest content item(s) from the content item delivery center 10a via the content item delivery means 20, and carries out reproduction of information for specific contents with a desired reproduction order by way of event information 40 (described later).

The content item delivery center 10a includes a content item delivery server 11a, a content item DB 12, and accounting means 13a. The content item delivery server 11a covers all server functions of the content item delivery system of the present embodiment. The content item delivery server 11a functions as an interface to the content item delivery means 20, such as the Internet or the like, and also administrates the ID number, the secret code etc. for each of plural content item reproduction terminal 30.

Further, the content item delivery center 10a may have the function of accounting means 13a, which carries out accounting processes for the content item delivery service. Moreover, though the present embodiment uses only one content item delivery center 10a, the system may use a plurality of content item delivery centers 10a by connecting them via the Internet or the like. This server means may be realized in many ways according to the various existing technologies, therefore the minute explanation thereof is omitted here.

The content item DB 12 stores a list of various types of brand-new content in the form of a tree-structure. The content item here means a wide range of software information including a sound file - music, narration, sound effect, ambient sound, Midi - automatic reproduction by simulation, text - reading of text, or automatic-generation content items which is automatically produced by a program.

The example in Figure 12 shows, for convenience, local forecast programs, news program of various fields, and trendy music programs; however, the content item DB 12 actually includes 1) program guide, 2) lists of content items and automatic update information, 3) other program reference list (request information), in addition to the foregoing 4) forecast information, news information, traffic information, music information etc.

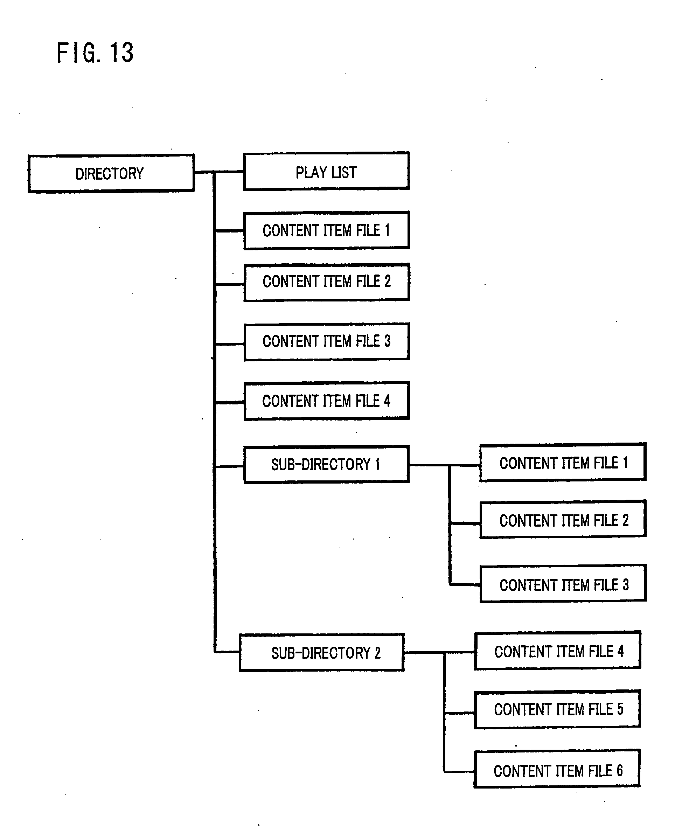

In the present invention, as shown in Figure 13, those content items are stored in the content item DB 12 in the form of a tree. This allows separate selecting of content items in each content item file in the content item DB 12, i.e., the user selects an arbitrary content item after specifying, for example, the content item file 1; or specifies a sub-directory 1 first and then specifying one of the content item files 1, 2 and 3. In this view, the present invention differs from the conventional content item specifying method, in which each content item is specified by the name.

The accounting means 13a is used for charging the user of content item reproduction terminal 30 for delivery of content item (product) by the delivery center 10a, the information provider. The charging means 13a separately charges the user for each content item reproduction terminal 30 by ID number basis. The fees for each content items are set in advance.

In the present embodiment, the content items are delivered unilaterally from the content item delivery center 10a to the content item reproduction terminal 30; however, the present invention may be arranged so that the content item reproduction terminal 30 provides predetermined information to the content item delivery center 10a. In this case, the fee for information delivery from the content item reproduction terminal 30 may be paid to the content item reproduction terminal 30.

Data acquisition from the content item delivery means 20 may be performed by logging online to network, or by accessing a memory card in a PC in off-line state.

The content item reproduction terminal 30 is a content item reception device, which is often provided in a car, allowing the user to obtain information. In on-line state, the content item reproduction terminal 30 becomes wirelessly connected to the content item delivery center 10a, the information provider, via the content item delivery means 20 (Internet or the like).

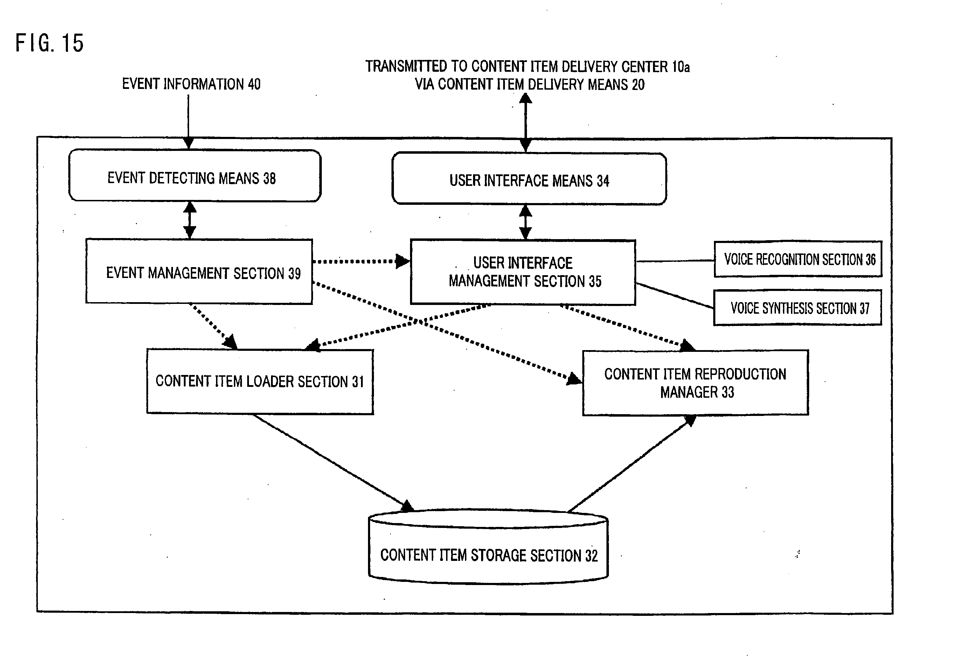

As shown in Figure 15, the content item reproduction terminal 30 includes a content item loader section (information reproduction method changing means) 31, a content item storage section (information reproduction method changing means) 32, a content item reproduction manager (information reproduction method changing means) 33. The content item loader section 31 functions as an interface section with respect to the Internet, which is the content item delivery means 20, and downloads various content items (program data) in the background from the content item delivery center 10a according to the event information 40 (described later), and stores the downloaded data into the content item storage section 32.

Here, the "background downloading" means downloading as parallel operation while the content item reproduction manager 33 is reproducing a content item. This enables the user of the content item reproduction terminal 30 to download another desired content item while one content item is being reproduced. Therefore, the user is not required to take the content item delivery operation into account, and is able to continuously obtain and reproduce content items like a FM radio or a CD player. Accordingly, the content items stored in the content item storage section 32 can be constantly updated automatically. Then, according to the mode of the downloaded content item, the content item reproduction manager 33 reproduces the downloaded content item by coordinatedly starting, for example, a TTF-Player, MP3-player, and a MIDI-player provided in the car.

According to the event information 40, the content item reproduction terminal 30 downloads content items not stored in the content item storage section 32, from the content item delivery center 10a as required. The event information 40 refers to the following various input information items.

### 1) Event information produced by operation by a user

For example, the user gives voice orders, such as "start, pause, next, previous, jump 3, next program etc." to the terminal, which are interpreted by an existing voice-recognition technology as instructions to carry out the next operation. This operation by the user is not limited to this voice message-type order using a voice recognition technology, but may be push-button selecting operation by the user.

### 2) Event information transmitted from the content item delivery center 10a

For example, if the content item delivery center 10a detects generation of earthquake, the content item delivery center 10a downloads information regarding the earthquake to the content item reproduction terminal 30 regardless the user's intention, so that the user is given the earthquake information without any choices.

### 3) Event information from an external sensor

For example, assume the vehicle has a sensor for each functional part, such as an engine. Then, when the sensor of engine detects some kind of engine trouble, the information given by the sensor is regarded the event information, so that the GPS system in the vehicle transmits information indicating the current position of the vehicle to the content item delivery center 10a. As a result, the content item delivery center 10a transmits the instruction to get to the nearest vehicle workshop, which is found in accumulated data in content item DB12, to the content item reproduction terminal 30, and the instruction is automatically downloaded to the content item reproduction terminal 30 as content item information. This enables the user to automatically obtain required information for vehicle repair.

### 4) Event information produced in the content item reproduction terminal

One possible example of this information is any other content item(s) required during reproduction of a predetermined content item.

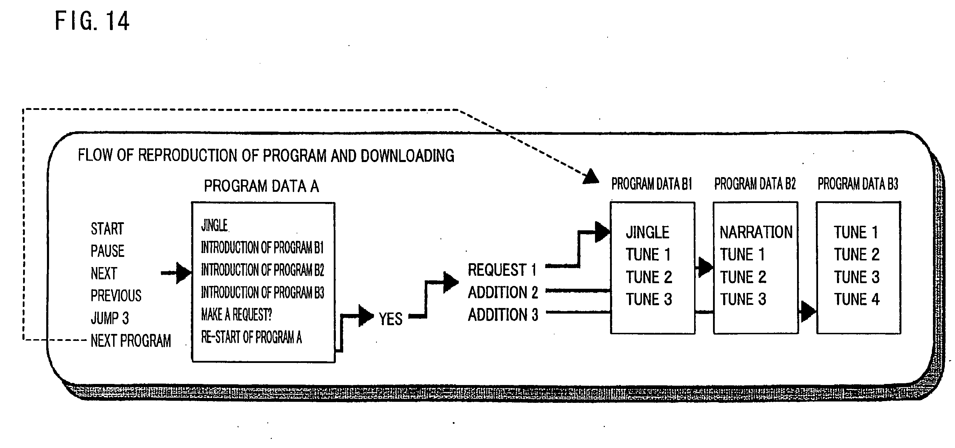

Note that, in the present invention, the component, the reproduction order etc. of the content items can be selected according to one or plural sets of event information, when the content items are prepared. Figure 14 shows an example of flow of program reproduction and downloading when the event information is supplied to the content item reproduction terminal 30 in response to the driver's voice instruction. Note that, as described, since currently there are many voice-recognition technologies which allow the foregoing voice instruction, the minute explanation of voice recognition method is omitted here. This example assumes that one of start, pause, next, previous, jump 3, and next program, can be recognized as voice instruction.

As shown in Figure 12, the current program data A is reproduced in response to the voice instruction "start" (event information) given by the driver. The user also may give voice instruction "next program", which cancels the program A and changes the display to the program B1. As shown in Figure 14, the program data A is edited in advance, including a jingle of several seconds, introduction of program B1, introduction of program B2, a question "make a request?", before the real content of program A is started.

When the user gives voice instruction "yes" to respond to the question "make a request?" from the program A (i.e., when the user gives event information), the content item loader section 31 downloads the program B1 from the content item delivery center 10a in response to the event information from the user. Therefore, in this case, the program A is cancelled halfway, and the program B is reproduced instead after being completely downloaded.

Further, the program A may be arranged so that the programs B2 and B3 are also downloaded in response to the voice instruction "yes" by the user in parallel with reproduction of program data B1. When the program data A is arranged as in Figure 14 by the program creator, the user is able to obtain only the most desired content items with limited voice instruction.

Figure 15 is a block diagram more specifically showing function of the content item reproduction terminal 30. As described above, the content item reproduction terminal 30 is capable of changing the contents or reproduction order for the content items downloaded from the content item delivery center 10a via the content item delivery means 20, based on various types of event information 40.

The event information 40 is detected by event detecting means 38. The event detecting means 38 is, for example, predetermined judgment means for detecting defects from the microphone in the case of voice instruction, from the switching buttons in the case of push-button instruction, or from the sensor output in the case of detecting engine trouble using the foregoing sensor.

The detected event information is transmitted from an event management section 39 to the content item loader section 31, the content item reproduction manager 33, a user interface management section 35 etc. Note that, the voice recognition is carried out by a voice recognition section 36, and the voice guidance to the user is carried out through a voice synthesis section 37. With the detected event information, the content item loader section 31, the user interface management section 35, and user interface means 34 download desired content items from the content item delivery center 10a via the content item delivery means 20.

The content items thus downloaded are stored in the content item storage section 32 via the content item loader section 31 as brand-new data, and are reproduced by the content item reproduction manager 33 with various reproduction devices. Note that, the event detection does not necessarily mean the voice detection above, but may be detection by other functional sensors, or may be instruction automatically generated in the content item reproduction terminal.

Next, the following separately describe specific examples of (i) reproduction of content items stored in the content item storage section 32, and (ii) delivery and reproduction of new contents which are not stored in the content item storage section 32, in the content item reproduction terminal 30.

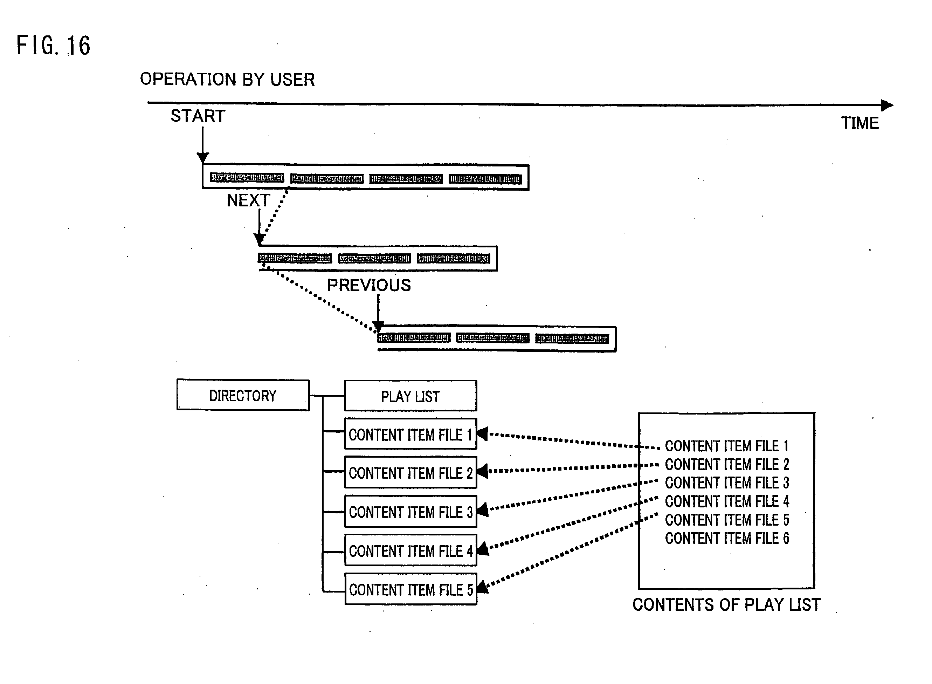

In the conceptual view of Figure 16, the content item storage section 32 of the content item reproduction terminal 30 currently store the content item files 1 through 4, for example Music 1 through Music 4, which are ready for reproduction in a predetermined order. In this case, when the event information is given to the content item reproduction terminal 30 during reproduction of music 1 as user's voice instruction "next", Music 1 is abandoned, and the file is immediately changed to Music 2, followed by Music 3 Music 4. That is, the files are reproduced according to the predetermined order.

Further, if the user gives voice instruction "previous" as event information to the content item reproduction terminal 30 while Music 3 is reproduced according to the predetermined order, Music 3 is stopped and Music 2 is reproduced from the beginning, followed by Music 3 and Music 4.

Next, in the following case, the user wishes to obtain a new desired content item(s), which is not stored in the content item storage section 32, and receives the content item through request operation with respect to the content item reproduction terminal, and then reproduces the obtained content item. This request operation for delivery of new content item is processed differently depending on the content item or the operation history of the terminal. For example, the request for delivery of new content item may be transmitted to the center via the network immediately in response to the request operation, or the delivery of new content item may be delayed from the time the request operation is made, further, instead of new data delivery, the content item data having been delivered and stored in a memory of the terminal may be used.

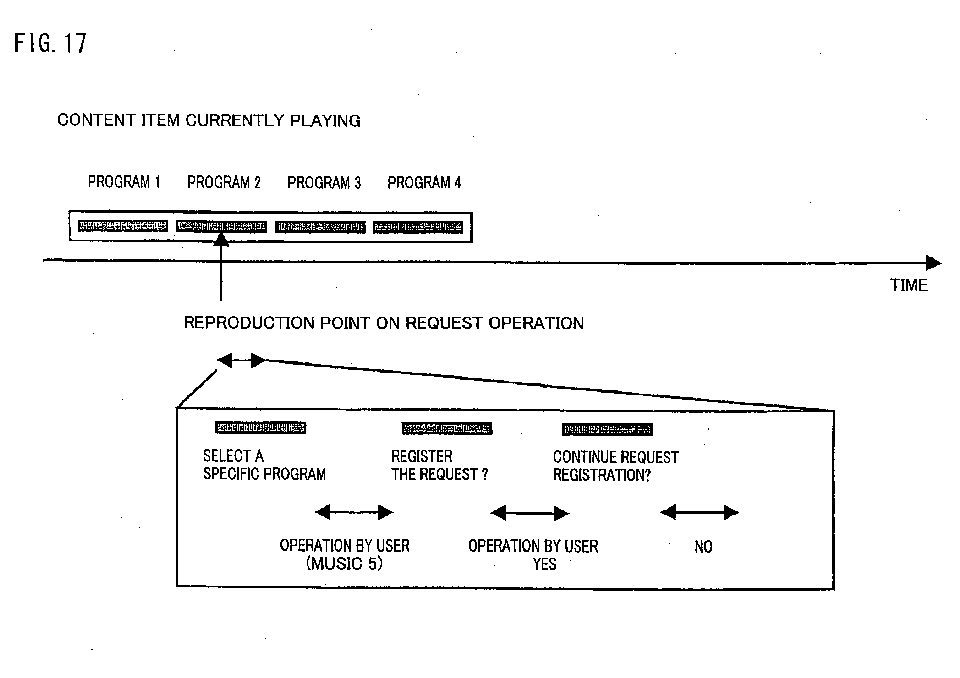

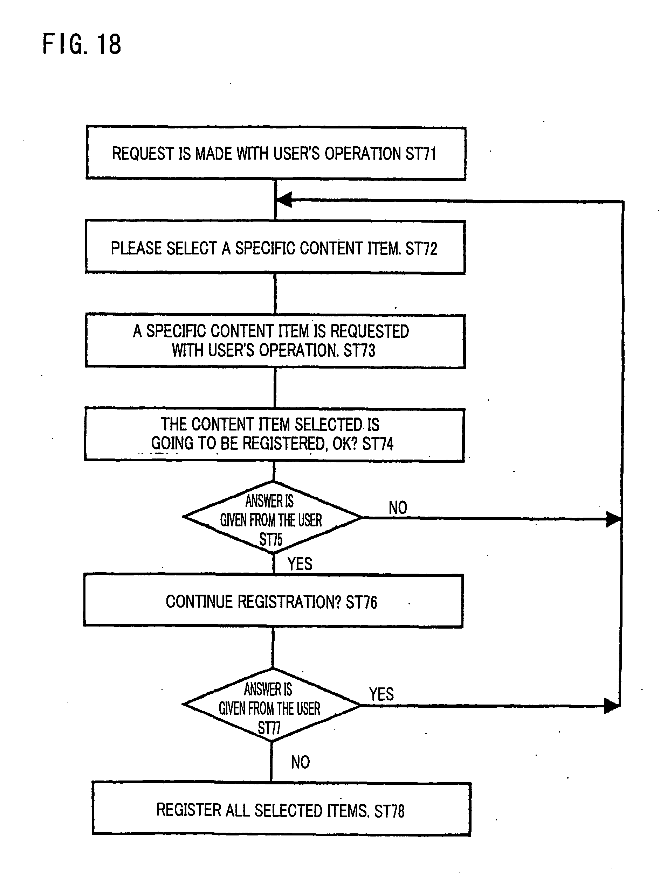

Figures 17 shows a conceptual view showing request operation by the user for downloading a new content item, which is not stored in the content item storage section 32, from the content item delivery center 10a, and Figure 18 shows the flow chart of the operation. This example assumes that the programs 1, 2, 3 and 4 are currently reproduced. On halfway of the program 2, the user input a predetermined request command to the content item reproduction terminal 30 (ST71). More specifically, the user inputs a request command, which functions as the event information 40, either as voice instruction or with predetermined switching operation.

On receiving the command, the content item reproduction terminal 30 demands the user to select a specific content item(s) (ST72), and the user selects the program 5, for example (ST73). The user also specifies other request items, if there are any (ST74 to ST77). Then all requested items are recorded (ST78) before transmitted to the content item delivery center 10a. In this manner, the program 5 and other content items which the user has selected are transmitted to the content item delivery center 10a via the content item delivery means 20.

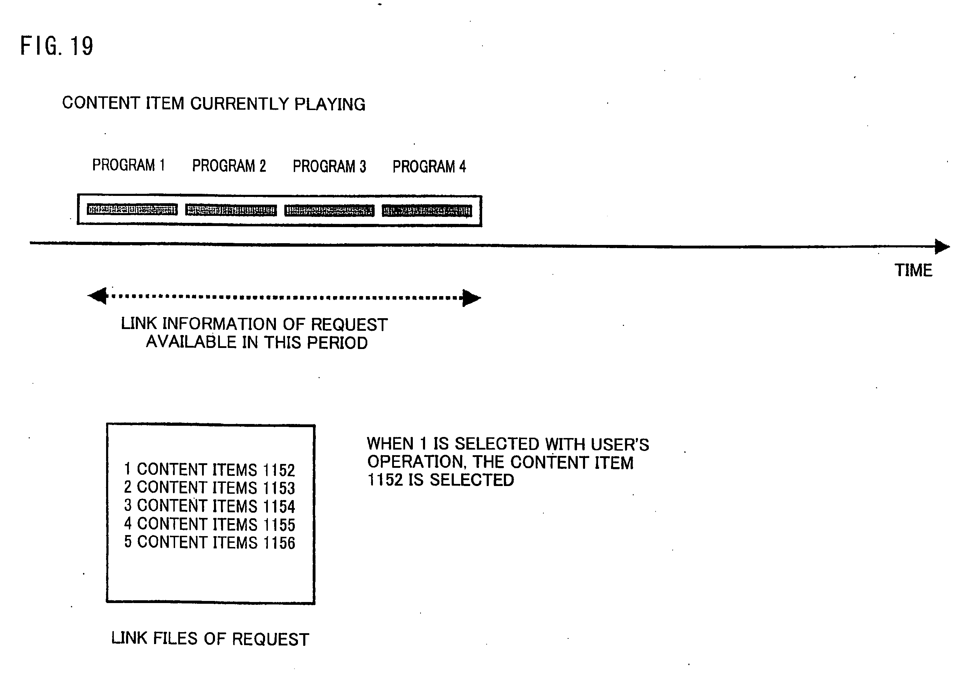

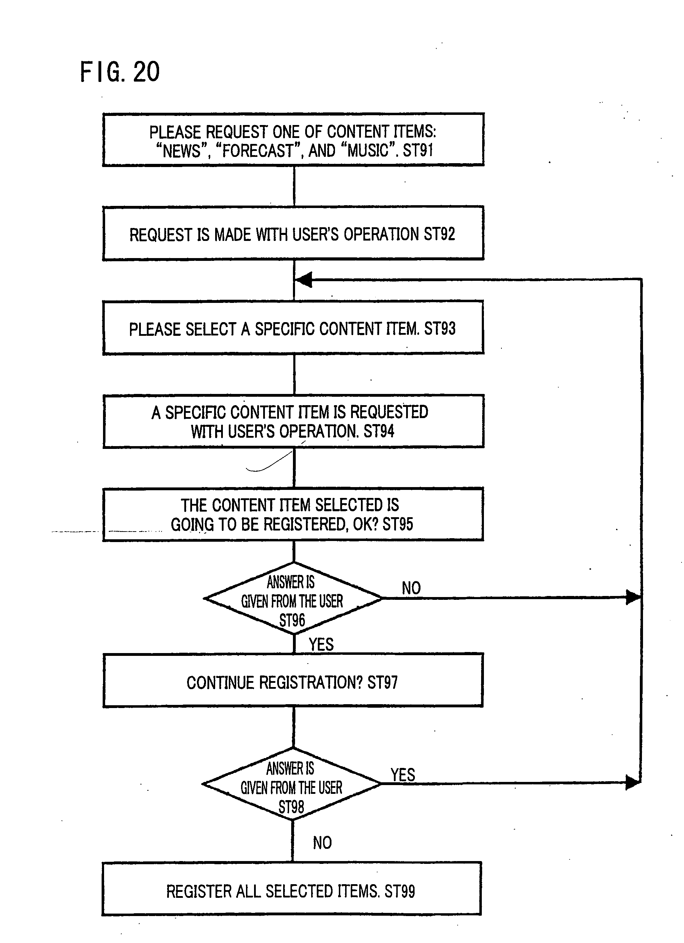

Figures 19 and 20 respectively show a conceptual view and a flow chart of another request operation. In this case, a content item includes link information, which functions as a request guidance for the user to make a request. In this manner, one content item causes loading of another content item(s).

For example, assume that programs 1 through 4 are currently reproduced, and they are all constituted as epitomes of the available programs. Then, when the user selects the program 1 for example, and makes a request for the program to the content item reproduction terminal 30 (ST91), the program 1 is recorded (ST92 through ST99), and the whole content of the program 1 is transmitted from the content item delivery center 10a.

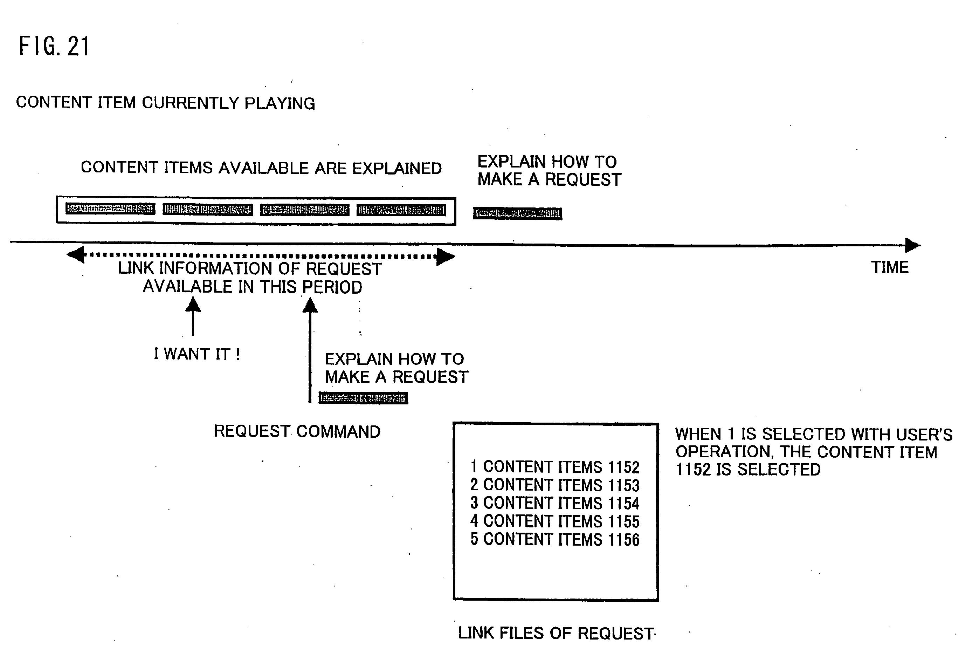

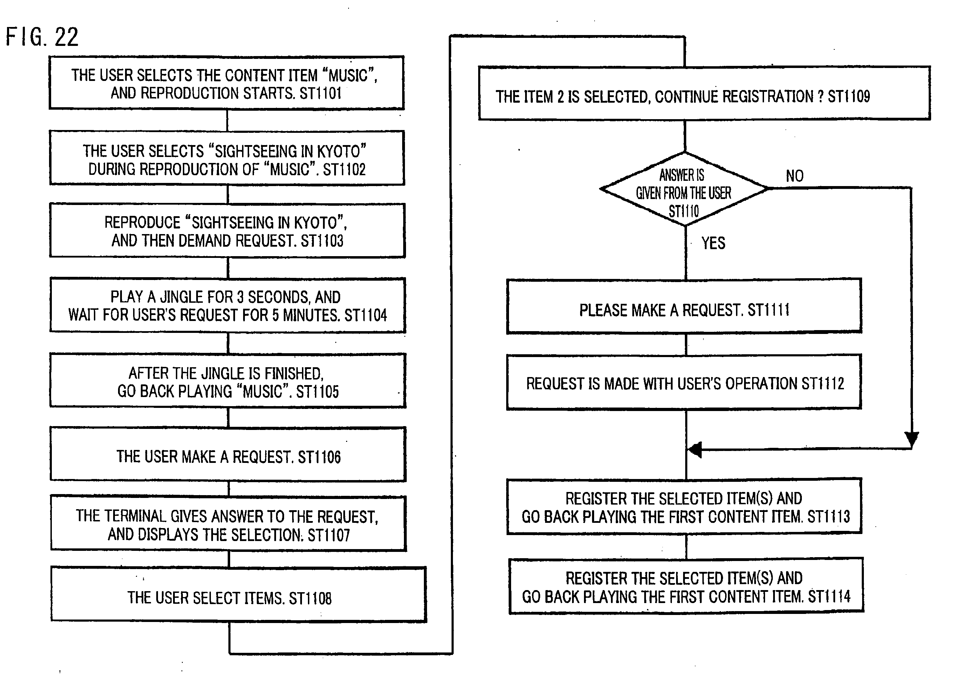

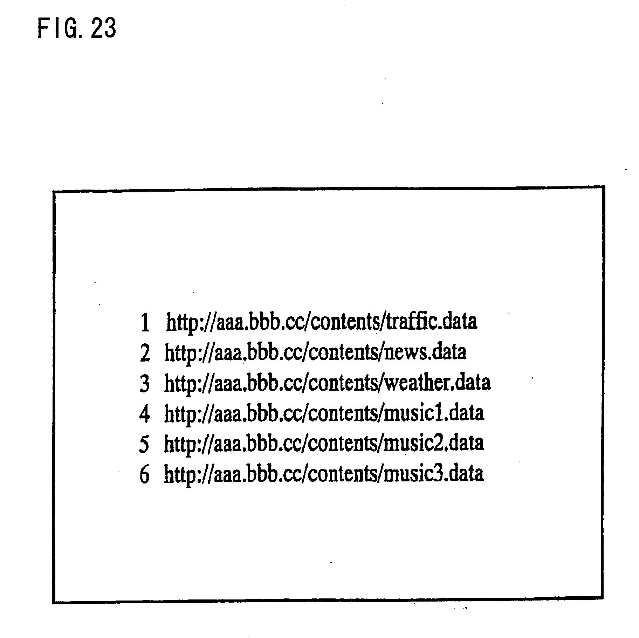

Figures 21 and 22 respectively show a conceptual view and a flow chart of still another request operation. In this case, a content item explains another content item, which is a whole program; and the user makes a request for the content item (program) with reference to the explanation. Figure 23 shows a request list of the program (content item). By placing a request list file in the directory of content item data, the content item reproduction terminal 30 becomes ready to accept requests. The following files are examples of request files placed in the directory.
1) request.1st
2) program.1st
3) new_contents_guide.mp3

In this case, for example, if the user issues a command "Sightseeing in Kyoto" (ST1102) while he/she is enjoying a music content item (ST1101), the content item reproduction terminal 30 carries out the following operation.

As the content item directory is constituted of the files listed above, when the user selects the content item for reproduction, the content item reproduction terminal first reproduces the file "new_contents_guide.mp3", which contains a five-second jingle (music), followed by the following voice guidance.

"Welcome to Kyoto event guidance. Now autumn is here, and we are getting reports of autumn foliage from many places. In Sagano, the leaves in the Jyojyakukoji Temple are now the best time to see, and in Ohara, ..., we have more detailed information, and waiting for you to visit us." (ST1103)

Then, a three-second jingle is reproduced, and from the moment the content item reproduction device waits for input of request command for, for example, five minutes (ST1104, ST1105). When the user input a request command (ST1107) within five minutes, the terminal responds as follows.

"Welcome to Kyoto sightseeing guidance. Thank you for visiting us. Now you have four choices.
1. Tour in Sagano
2. "Tales of Genji" tour
3. Autumn gourmet tour
4. Wanna be Geisha?
Please input the number you like." (ST1108)

When the user selects 2 (ST1108), the terminal responds, "You have selected "Tales of Genji' tour. Do you have any more requests ?". When the user says "No", the selected item is recorded (ST1109 through ST1112), and the terminal starts playing the music content item again from the point where the user issues the "Sightseeing guidance" (ST1113). Then, when the user inputs the "Kyoto sightseeing guidance", the selected content item is reproduced as an additional content item (ST1114).

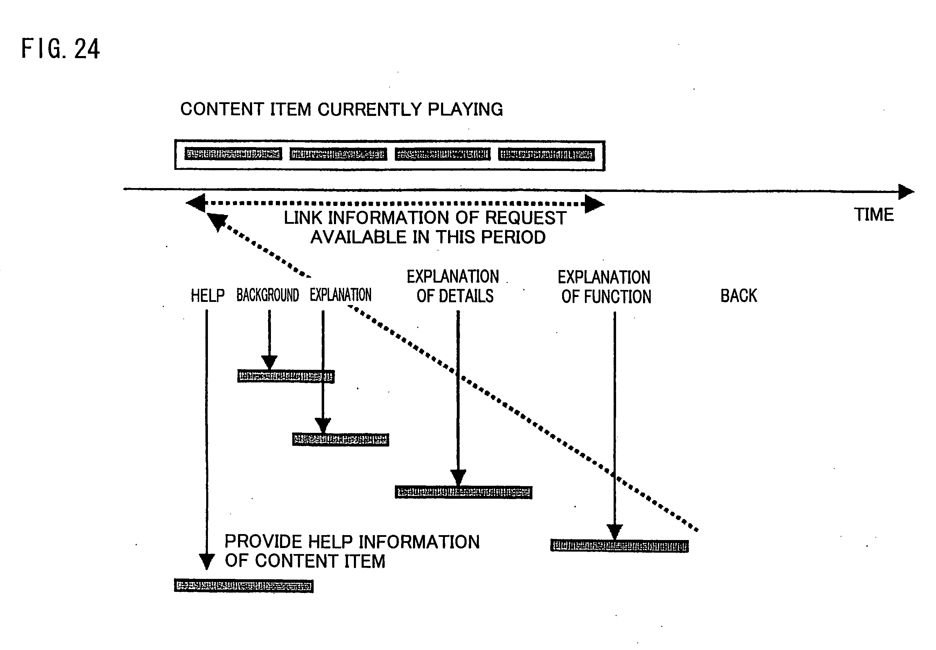

Figure 24 is a conceptual view showing yet another request operation. In the present embodiment, when a request command is issued during reproduction of content item, the content item selected at the time is automatically recorded.

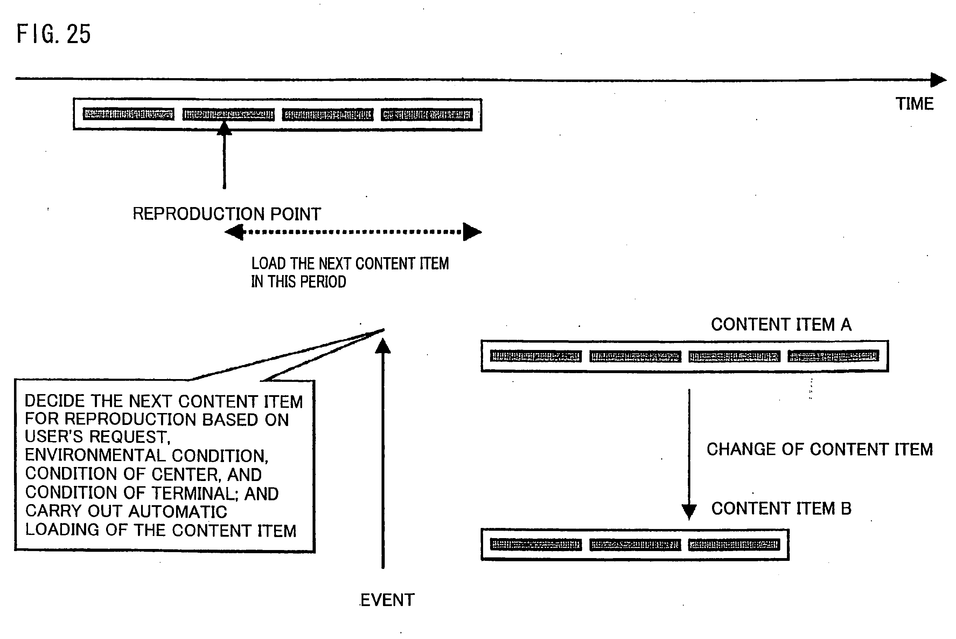

Note that, in the foregoing request manner, loading of new content item is not performed without a user's request; that is, the content item is not updated unless the user makes some moves. This method itself therefore only requires more user's operation. Thus, it is preferable that the method has a automatic loading function for content items, as shown in Figure 25 in which the content item A currently reproduced is changed into a content item B in response to occurrence of event information 40, such as a request command.

Next, the content item delivery means 20 shown in Figure 12 carries out delivery of content item through downloading via a network, transportation with a physical medium, transmission using an electric connecting means, automatic production by calculation. As described above, the content item to be delivered is selected by specifying all data items in a directory of the tree-structure (directory structure).

More specifically, the delivery of content item is carried out by copying data of the selected content item, that is, all contents of the directory corresponding to the selected content item, and those in the sub-directory thereof.

To carry out such a data delivery, the content item reproduction terminal needs to be capable of some kind of operation to specify a directory. With this function of the content item reproduction terminal, when the user carries out operation to specify the content item, the content item reproduction terminal 30 specifies a directory of the content item delivery center 10a via the content item delivery means 20. Then, the all data items contained in the directory are delivered.

As described, the delivery of content items is completed by shifting all contents of a directory corresponding to the selected content item. Further, on delivering content item, it is possible to separately deliver each file, however, to avoid complication of protocol, it is more preferable that the data items are archived in a single file and are transmitted as compressed data.

Further, to avoid illegal copying of content items, copy-protection means is strongly recommended. In the present method, delivery of content items is carried out by copying all files in the directory corresponding to the content item, regardless of which content item is selected, to the content item reproduction terminal 30. Therefore, a commercially-available copy-protection means works sufficiently.

Note that, though the foregoing embodiment describes a structure in which content items are delivered via the content item delivery means 20, the present invention is not limited to this structure. For example, the content item data may be stored in a commonly-used physical storage medium, such as a memory card, CD, CD-ROM, CD-R, CD-RW, DVD, DVD-ROM, DVD-R, DVD-RW, DVD-RAM, or a printed matter. In this case, the content items are delivered by being read out by the content item reproduction terminal.

Further, when the content item delivery terminal and the delivery means can be physically brought into contact with each other, such as a content item delivery terminal placed on the street, the delivery of content item can be performed via electric conduction. For example, the content item delivery terminal is provided with a connector which allows conduction between the terminal and the content item delivery terminal, thereby sending content items by electrical transmission. This may be easily realized by using a USB cable or the like.

### [Summary of the second embodiment]

As described, the information delivery system (content item delivery system) according to the present invention is arranged so that: the information delivery center (content item deliver server) includes (i) a content item data base for accumulating a plurality of content item files, (ii) an information delivery server (content item delivery server) for delivering the content item files, and (iii) a plurality of information reproduction devices (content item reproduction terminal for reproducing content items received from the information delivery center via content item delivery means. and the information delivery system is capable of changing content or reproduction order of the content items in the information reproduction device, which content and order are determined when the content item is created, according to one or a plurality of: event information produced by operation by a user, event information transmitted from the information delivery center, event information from an external sensor, and event information produced in the information reproduction device. This system allows the user to obtain only the most desired content items from an external information source.

If the information delivery system of the present invention is expressed as a content item delivery system, the content item deliver center includes (i) a content item data base for accumulating a plurality of content item files, and (ii) a content item delivery server for delivering the content item files, and (iii) a plurality of the content item reproduction terminals for reproducing content items received from the information delivery center via content item delivery means. The content item delivery system is capable of changing content or reproduction order of the content items in the content item reproduction terminal, which content and order are determined when the content item is created, according to one or a plurality of: event information produced by operation by a user, event information transmitted from the content item delivery center, event information from an external sensor, and event information produced in the content item reproduction terminal.

The event information here may be information of unexpected earthquake or the like. On detecting such information, the information delivery center delivers an information program regarding the earthquake as a content item by priority. Further, the event information from an external sensor may be an output of a sensor provided to functional components of vehicle (e.g. engine), informing that the sensor detects an engine trouble. When the information reproduction device receives such event information, the currently reproduced program, for example, a music program, is immediately cut off, and information of the closest car repair place is transmitted from an external information source via the information delivery center, which information is reproduced after downloading.

Further, the event information generated in the information reproduction device may be such a condition that the user wants stock quotation information immediately. In this case, the information reproduction device reproduces a stock quotation program as a content item.

In this case, the plurality of content item files are accumulated in a tree-structure upper directory including a plurality of lower directories, allowing a user of the information reproduction device to select a target upper directory or a lower directory so that all content item data in the target upper directory or the lower directory thus selected are downloaded as one group.

For example, by constructing a directory A as a tree form containing content items 1 through 4 and a sub-directories, the user may separately selects each content item , or may be selects the whole sub-directories.

With this tree structure containing a plurality of content item files, the plurality of content items may be easily downloaded as one group. This function distinguishes the present invention from a general FM radio program.

Further, since the foregoing information delivery center has an accounting function for carrying out predetermined accounting operation regarding delivery of content items from the information delivery center to a plurality of the information reproduction devices, the information delivery center is capable of pay-content-delivery between a plurality of content item delivery companies and users of plural information reproduction devices. This offers opportunity of creation of new business model.

Further, in the information delivery system according to the present invention which delivers a combination of plural content item files, each of the plurality of content item files previously includes a guide content item (sub content item) which instructs the user to carry out reproduction of content item. The guide content item is reproduced whenever required by switching operation by the user. On this account, the user obtains desired content items with a simple requesting action.

Further, in the information delivery system according to the present invention, update event information of the content item data in the information delivery center is transmitted to the information reproduction device, so that the content item files are automatically updated in the information reproduction device by fetching update event information of content item data before the user uses the information reproduction device under a predetermined condition. Accordingly, when the user starts up the information reproduction device, the content items are immediately updated before reproduced, thereby reducing communication load of the information delivery center.

For example, when the music program A regarding a singer A is ready to be reproduced in the information reproduction device, if the information reproduction device receives update event information indicating that the program A is updated to the newest music program B in the information delivery center, the information reproduction device automatically acquires the music program B from the information delivery center. In this way, the information reproduction device reproduces the newest song of the singer A at all times without user's operation.

Further, the information delivery system according to the present invention is arranged so that the information reproduction device is capable of reproduction of a program introducing other programs than the program currently running, allowing the user to select one of the introduced programs with input of event information by operation by a user With this function, the information reproduction device dynamically receives delivery of the subsequent program.

For example, when the information reproduction device is arranged to reproduce the programs 1, 2, 3 and 4 in this order, the information reproduction device may cut off reproduction of program 1, and reproduces a program for introducing programs A, B, C and D. In this case, if the user selects the program B for example, the information delivery center delivers the program B so that the user can view the programs in order of 1, B, 2, 3 and 4. Note that, even during the reproduction of program B thus selected, a program for introducing further different programs can be reproduced, allowing the user to select one of them as the subsequent program.

With this arrangement, when a program is finished, the reproduction can be continued by immediately reproducing the delivered data of subsequent program, thereby performing serial reproduction of programs. More specifically, with content items for introducing other content items, the user is allowed to download the introduced content items, which are linked with further different content items which can also be downloaded. By thus continuously loading content items, it is possible to offer series reproduction of content items.

The present invention further discloses an information reproduction device used for the information delivery system, an information reproduction method, an information delivery control method, and a computer-readable storage medium storing the method as a program.

With the information delivery system of the present invention having the described functions, the user is only required to turn on the reproduction device like a FM radio or a television, and dynamically select the target content items. As a result, the content items are automatically delivered from the information delivery center continuously. Therefore, the users are not required to take trouble to continuously input commands for serial displays of plural content items, like they do in browsing information with a personal computer using a web-browser.

Further, unlike the conventional broadcast-type services such as FM radio, the user is allowed to carry out on-demand operation through operating means or voice commands during reproduction of a content item. Further, the foregoing system allows the users to change the state of content item delivery service by operating the information reproduction device while a content item is reproduced; therefore, the user will more flexibly enjoy the content item delivery service. Further, in this system, the user is free from any concern of system or procedures of content item delivery during the reproduction of content items.

Further, in the information delivery system according to the present invention with the described functions, the user is able to request any desired content items to be downloaded into the information reproduction device. This process also enables the content item provider to know which content item the user desires. Consequently, the content items according to user's request are automatically transmitted to the information reproduction device. This is contrary to the conventional broadcast-type services in which the content items are unilaterally transmitted.

Further, the system allows reference of other content items during reproduction of a content item, and the user may load the reference content items into the information reproduction device according to a change in purposes or circumstances. In this way, a single content item automatically leads the user to another content item, which is linked with still another content item, thereby providing a chain service.

More specifically, as described, a content item for introducing other content items is prepared in advance, allowing the user to load the introduced items, the second content items. Further, by incorporating introduction of still further content items, the user is allowed to load the third content items, then the fourth content items in the same way, thereby providing a chain service.

This method only requires storing files, which contains content items, into one of the directory trees of the storage device. Therefore, it is not necessary to write a program in a programming language or scripting file with complicated grammar.

Further, since the present invention enables reproduction of content items regardless of delivery time of the content items, a wider range of the content item delivery means can be used. On this account, the content item deliver may be performed not only through a network but also through a physical storage medium such as a CD-R, a DVD-R, a memory card or the like.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### INDUSTRIAL APPLICABILITY

The present invention is useful to realize an information delivery system taking advantages of both DSRC communication allowing high-speed communication and mobile phone communication allowing wide-area communication. The present invention is also useful to realize a system in which a series of information is downloaded in the background from a certain content item delivery center by content item reproduction means such as car audio, while allowing the user to select an arbitrary one of the received series of information and decide the reproduction order of the selected content item.

## Claims

1. An information delivery system in which an information reproduction device reproduces information delivered from an information delivery center,
the information delivery system comprising information reproduction mode changing means for changing reproduction mode for the information based on circumstances on information reproduction in the information reproduction device.

2. The information delivery system as set forth in claim 1, further comprising:
first communication means for enabling communication between a mobile body and the information delivery center, the mobile body including the information reproduction device and residing in a first communication area; and
second communication means for enabling communication between the mobile body and the information delivery center when the mobile body resides in a second communication area which is larger than the first communication area, the second communication means carrying out communication with a higher speed than the first communication means,
wherein:
the information reproduction mode changing means includes:
determining means for determining a level of attribute information of target information, which is selected by a user of the mobile body and is to be delivered from the information delivery center; and
selecting means for selecting either the first communication means or the second communication means to be used for delivery of the target information to the information reproduction device, based on a determination result of the determining means.

3. The information delivery system as set forth in claim 2, wherein:
the selecting means carries out the selecting using a determination reference table in which a level of attribute information and communication means to be used for transmission of the target information are related with each other previously.

4. The information delivery system as set forth in claim 1, further comprising:
first communication means for enabling communication between a mobile body and the information delivery center, the mobile body including the information reproduction device and residing in a first communication area; and
second communication means for enabling communication between the mobile body and the information delivery center when the mobile body resides in a second communication area which is larger than the first communication area, the second communication means carrying out communication with a higher speed than the first communication means,
wherein:
the information reproduction mode changing means includes:
determining means for determining a level of attribute information of target information, which is selected by a user of the mobile body and is to be delivered from the information delivery center;
determination information transmitting means for transmitting determination information, which is a determination result of the determining means, to the mobile body via either the first communication means or the second communication means;
selecting result transmitting means for transmitting to the information delivery center a selecting result made by the user as to which of the first communication means and the second communication means is used for obtaining the target information, which result is made based on the determination information transmitted from the determination information transmitting means; and
selecting means for selecting either the first communication means or the second communication means to be used for delivery of the target information to the information reproduction device, based on the selecting result transmitted from the selecting result transmitting means.

5. The information delivery system as set forth in claim 4, wherein:
the determination information transmitting means transmits the determination information by the second communication means.

6. The information delivery system as set forth in any one of claims 2 through 5, wherein:
the attribute information is urgency of transmission of the target information.

7. The information delivery system as set forth in any one of claims 2 through 6, wherein:
the attribute information is a data amount of the target information.

8. The information delivery system as set forth in any one of claims 2 through 7, wherein:
the attribute information is time needed for transmission of the target information via either the first communication means or the second communication means.

9. The information delivery system as set forth in any one of claims 2 through 8, wherein:
the second communication means is wireless telephone communication.

10. The information delivery system as set forth in claim 9, wherein:
the wireless telephone communication is a mobile phone communication.

11. The information delivery system as set forth in any one of claims 2 through 10, wherein:
the first communication means is DSRC communication.

12. The information delivery system as set forth in claim 11, wherein:
selecting means selects the first communication means to be used for transmission of the target information to the mobile body, and reserves a DSRC terminal device used for the transmission of the target information before the transmission.

13. The information delivery system as set forth in any one of claims 11 or 12, wherein:
the attribute information is a distance from the mobile body to a DSRC terminal device nearest the mobile body.

14. The information delivery system as set forth in any one of claims 11 through 13, wherein:
the attribute information is a time that the mobile body takes to reach a communication area for the nearest DSRC terminal device.

15. An information acquisition device comprising first communication means for enabling communication between the information delivery center and a mobile body which resides in a first communication area; and second communication means for enabling communication between the information delivery center and the mobile body which resides in a second communication area larger than the first communication area, wherein the first communication means carries out communication with a higher speed than the second communication means,
wherein:
a user of the mobile body transmits setting information for specifying target information, which is information the user wishes to obtain from the information delivery center, the setting information being transmitted via either the first communication means or the second communication means, and
the user obtains the target information via either the first communication means or the second communication means, which is selected by the information delivery center based on the setting information.

16. An information acquisition device comprising first communication means for enabling communication between the information delivery center and a mobile body which resides in a first communication area; and second communication means for enabling communication between the information delivery center and the mobile body which resides in a second communication area larger than the first communication area, wherein the first communication means carries out communication with a higher speed than the second communication means,
wherein:
a user of the mobile body transmits setting information which specifies target information the user wishes to obtain from the information delivery center, the setting information being transmitted via either the first communication means or the second communication means,
the user receives from the information delivery center determination information for a level of attribute information of the target information, which level is determined by the information delivery center based on the setting information; and
the user selects either the first communication means or the second communication means to be used for obtaining the target information, based on the determination information.

17. An information delivery server which performs communication with a mobile body residing in a first communication area via first communication means, and performs communication with the mobile body residing in a second communication area, which is larger than the first communication area, via second communication means, the first communication means carrying out communication with a higher speed than the second communication means,
the information delivery server comprising:
determining means for determining a level of attribute information of target information the user wishes to obtain; and
selecting means for selecting either the first communication means or the second communication means to be used for delivery of the target information to the mobile body, based on a determination result of the determining means.

18. An information delivery server which performs communication with a mobile body residing in a first communication area via first communication means, and performs communication with the mobile body residing in a second communication area, which is larger than the first communication area, via second communication means, the first communication means carrying out communication with a higher speed than the second communication means,
the information delivery server comprising:
determining means for determining a level of attribute information of target information the user wishes to obtain from the information delivery center;
determination information transmitting means for transmitting determination information, which is a determination result of the determining means, to the mobile body via either the first communication means or the second communication means;
selecting result receiving means for receiving from the mobile body a selecting result made by the user as to which of the first communication means and the second communication means is used for obtaining the target information, which result is made based on the determination information transmitted from the determination information transmitting means; and
selecting means for selecting either the first communication means or the second communication means to be used for delivery of the target information to the information reproduction device, based on the selecting result received by the selecting result receiving means.

19. An information delivery control method for an information delivery system,
the information delivery system comprising first communication means for enabling communication between an information delivery center and a mobile body which resides in a first communication area; and second communication means for enabling communication between the information delivery center and the mobile body which resides in a second communication area larger than the first communication area, wherein the first communication means carries out communication with a higher speed than the second communication means,
the method comprising the step of:
selecting either the first communication means or the second communication means to be used for transmission of target information which the user wishes to obtain from the information delivery center, based on a level of attribute information of the target information.

20. An information delivery control method for an information delivery system,
the information delivery system comprising first communication means for enabling communication between an information delivery center and a mobile body which resides in a first communication area; and second communication means for enabling communication between the information delivery center and the mobile body which resides in a second communication area larger than the first communication area, wherein the first communication means carries out communication with a higher speed than the second communication means,
the method comprising the steps of:
determining in the information delivery center a level of attribute information of target information, which a user of the mobile body wishes to obtain from the information delivery center, and transmitting determination, which is as a determination result, to the mobile body via either the first communication means or the second communication means; and
transmitting to the information delivery center a selecting result made by the user as to which of the first communication means and the second communication means is used for obtaining the target information, which result is made based on the determination information transmitted from the determination information transmitting means, and selecting either the first communication means or the second communication means to be used for delivery of the target information to the mobile body, based on the selecting result.

21. An information delivery control program for causing a computer to execute the information delivery control method as set forth in claims 19 or 20.

22. A computer-readable storage medium storing the information delivery control program as set forth in claim 21.

23. The information delivery system as set forth in claim 1, wherein:
the information delivery center includes a content item data base for accumulating a plurality of content item files, and an information delivery server for delivering the content item files,
the information reproduction device reproduces content items received from the information delivery center via content item delivery means, and
the information reproduction mode changing means is capable of changing content or reproduction order of the content items in the information reproduction device, which content and order are determined when the content item is created, according to one or a plurality of: event information produced by operation by a user, event information transmitted from the information delivery center, event information from an external sensor, and event information produced in the information reproduction device.

24. The information delivery system as set forth in claim 23, wherein:
the content items are delivered in such a manner that the plurality of content item files are accumulated in an upper directory of a tree-structure including a plurality of lower directories, allowing a user of the information reproduction device to select a target upper directory or a lower directory so that all content item data in the target upper directory or the lower directory thus selected are downloaded as one group.

25. The information delivery system as set forth in claim 23, wherein:
the information delivery center has an accounting function for carrying out predetermined accounting operation regarding delivery of the content items from the information delivery center to a plurality of the information reproduction devices.

26. The information delivery system as set forth in claim 23, wherein:
each of the plurality of content item files previously includes a guide content item for showing details or usage instruction of the content item, the guide content item is reproduced whenever required by switching operation by the user.

27. The information delivery system as set forth in claim 23, wherein:
the plurality of content item files are automatically updated in the information reproduction device by delivering update event information of content item data from the information delivery center to the information reproduction device, and downloading via the content item delivery means updating content item data specified by the information reproduction device using the update event information before the user uses the information reproduction device under a predetermined condition, so that when the user starts up the information reproduction device, the content items are immediately updated before reproduced, thereby reducing communication load of the information delivery center.

28. The information delivery system as set forth in claim 23, wherein:
each of the plurality of content item files includes a program introduction content item for introducing other programs than a content item program currently reproduced, allowing the user to make a request of one of the programs in the program introduction content item with respect to the information delivery center using the event information produced by operation by the user, so as to obtain the program via the content item delivery means and reproduce the program after the content item program currently reproduced.

29. The information delivery system as set forth in claim 23, wherein:
each of the plurality of content item files includes a link content item which contains link information leading to other related content item, and a request guidance; and other content items than the content items accumulated in the information reproduction device are downloaded to the information reproduction device on user's request for obtaining the link content item.

30. The information delivery system as set forth in claim 23, wherein:
each of the plurality of content item files includes other content item as reference item of the content item, which reference item is previously decided by a content item creator; and each of the plurality of content item files includes information for allowing the user of the information reproduction device to make a request of the other content item during reproduction of a content item currently selected by the user, so as to enable delivery of other content item as a background job during reproduction of a content item.

31. An information reproduction device which receives a plurality of content item files via the content item delivery means from an information delivery center including a content item data base for accumulating the plurality of content item files, and an information delivery server for delivering the content item files, the information reproduction device reproducing the content items received from the information delivery center,
the information reproduction device is capable of changing content or reproduction order of the content items in the information reproduction device, which content and order are determined when the content item is created, according to one or a plurality of: event information produced by operation by a user, event information transmitted from the information delivery center, event information from an external sensor, and event information produced in the information reproduction device.

32. An information reproduction method for (i) receiving a plurality of content item files via the content item delivery means from an information delivery center including a content item data base for accumulating the plurality of content item files, and an information delivery server for delivering the content item files, and (ii) reproducing the content items received from the information delivery center,
the method comprising the step of:
changing content or reproduction order of the content items in the information reproduction device, which content and order are determined when the content item is created, according to one or a plurality of: event information produced by operation by a user, event information transmitted from the information delivery center, event information from an external sensor, and event information produced in the information reproduction device.

33. An information delivery control method for (i) delivering a plurality of content item files via the content item delivery means from an information delivery center, which includes a content item data base for accumulating the plurality of content item files, and an information delivery server for delivering the content item files,
wherein:
the content items delivered from the information delivery center are received and reproduced by a plurality of information reproduction devices, and the content items are delivered according to one or a plurality of:
event information produced by operation by a user, event information transmitted from the information delivery center, event information from an external sensor, and
event information produced in the information reproduction device.

34. A computer-readable program storage medium, which stores a program for (i) receiving a plurality of content item files via the content item delivery means from an information delivery center including a content item data base for accumulating the plurality of content item files, and an information delivery server for delivering the content item files, and (ii) reproducing the content items received from the information delivery center,
the program comprising the step of:
changing content or reproduction order of the content items in the information reproduction device, which content and order are determined when the content item is created, according to one or a plurality of: event information produced by operation by a user, event information transmitted from the information delivery center, event information from an external sensor, and event information produced in the information reproduction device.

## Amended claims

### Amended claims under Art. 19.1 PCT

**1.** An information delivery system in which an information reproduction device reproduces information delivered from an information delivery center,
the information delivery system comprising information reproduction mode changing means for changing reproduction mode for the information based on circumstances on information reproduction in the information reproduction device.

**2.** (Amended) An information delivery system in which an information reproduction device reproduces information delivered from an information delivery center,
the information delivery system comprising:
information reproduction mode changing means for changing reproduction mode for the information based on circumstances on information reproduction in the information reproduction device
first communication means for enabling communication between a mobile body and the information delivery center using DSRC communication, the mobile body including the information reproduction device and residing in a first communication area; and
second communication means for enabling communication between the mobile body and the information delivery center when the mobile body resides in a second communication area which is larger than the first communication area, the second communication means carrying out communication with a lower speed than the first communication means,
wherein:
the information reproduction mode changing means includes:
determining means for determining a time taken for the mobile body to reach a communication area for a nearest DSRC terminal device, as a level of attribute information of target information, which is selected by a user of the mobile body and is to be delivered from the information delivery center; and
selecting means for selecting either the first communication means or the second communication means to be used for delivery of the target information to the information reproduction device, based on a determination result of the determining means.

**3.** The information delivery system as set forth in claim 2, wherein:
the selecting means carries out the selecting using a determination reference table in which a level of attribute information and communication means to be used for transmission of the target information are related with each other previously.

**4.** (Amended) An information delivery system in which an information reproduction device reproduces information delivered from an information delivery center,
the information delivery system comprising:
information reproduction mode changing means for changing reproduction mode for the information based on circumstances on information reproduction in the information reproduction device
first communication means for enabling communication between a mobile body and the information delivery center using DSRC communication, the mobile body including the information reproduction device and residing in a first communication area; and
second communication means for enabling communication between the mobile body and the information delivery center when the mobile body resides in a second communication area which is larger than the first communication area, the second communication means carrying out communication with a lower speed than the first communication means,
wherein:
the information reproduction mode changing means includes:
determining means for determining a time taken for the mobile body to reach a communication area for a nearest DSRC terminal device, as a level of attribute information of target information, which is selected by a user of the mobile body and is to be delivered from the information delivery center;
determination information transmitting means for transmitting determination information, which is a determination result of the determining means, to the mobile body via either the first communication means or the second communication means;
selecting result transmitting means for transmitting to the information delivery center a selecting result made by the user as to which of the first communication means and the second communication means is used for obtaining the target information, which result is made based on the determination information transmitted from the determination information transmitting means; and
selecting means for selecting either the first communication means or the second communication means to be used for delivery of the target information to the information reproduction device, based on the selecting result transmitted from the selecting result transmitting means.

**5.** The information delivery system as set forth in claim 4, wherein:
the determination information transmitting means transmits the determination information by the second communication means.

**6.** (Amended) The information delivery system as set forth in any one of claims 2 through 5, wherein:
the attribute information includes urgency of transmission of the target information.

**7.** (Amended) The information delivery system as set forth in any one of claims 2 through 6, wherein:
the attribute information includes a data amount of the target information.

**8.** (Amended) The information delivery system as set forth in any one of claims 2 through 7, wherein:
the attribute information includes time needed for transmission of the target information via either the first communication means or the second communication means.

**9.** The information delivery system as set forth in any one of claims 2 through 8, wherein:
the second communication means is wireless telephone communication.

**10.** The information delivery system as set forth in claim 9, wherein:
the wireless telephone communication is a mobile phone communication.

**11.** (Deleted)

**12.** The information delivery system as set forth in claim 11, wherein:
selecting means selects the first communication means to be used for transmission of the target information to the mobile body, and reserves a DSRC terminal device used for the transmission of the target information before the transmission.

**13.** (Amended) The information delivery system as set forth in claim 1, in which an information reproduction device reproduces information delivered from an information delivery center,
the information delivery system comprising:
information reproduction mode changing means for changing reproduction mode for the information based on circumstances on information reproduction in the information reproduction device
first communication means for enabling communication between a mobile body and the information delivery center using DSRC communication, the mobile body including the information reproduction device and reside ing in a first communication area; and
second communication means for enabling communication between the mobile body and the information delivery center when the mobile body resides in a second communication area which is larger than the first communication area, the second communication means carrying out communication with a higher speed than the first communication means,
wherein:
the information reproduction mode changing means includes:
determining means for determining a time taken for the mobile body to reach a communication area for a nearest DSRC terminal device, as a level of attribute information of target information, which is selected by a user of the mobile body and is to be delivered from the information delivery center; and
selecting means for selecting either the first communication means or the second communication means to be used for delivery of the target information to the information reproduction device, based on a determination result of the determining means.

**14.** (Deleted)

**15.** An information acquisition device comprising first communication means for enabling communication between the information delivery center and a mobile body which resides in a first communication area; and second communication means for enabling communication between the information delivery center and the mobile body which resides in a second communication area larger than the first communication area, wherein the first communication means carries out communication with a higher speed than the second communication means,
wherein:
a user of the mobile body transmits setting information for specifying target information, which is information the user wishes to obtain from the information delivery center, the setting information being transmitted via either the first communication means or the second communication means, and
the user obtains the target information via either the first communication means or the second communication means, which is selected by the information delivery center based on the setting information.

**16.** (Amended) An information acquisition device comprising first communication means for enabling communication via DSRC communication between the information delivery center and a mobile body which resides in a first communication area; and second communication means for enabling communication between the information delivery center and the mobile body which resides in a second communication area larger than the first communication area, wherein the first communication means carries out communication with a higher speed than the second communication means,
wherein:
a user of the mobile body transmits setting information which specifies target information the user wishes to obtain from the information delivery center, the setting information being transmitted via either the first communication means or the second communication means,
the user receives from the information delivery center determination information for a level of attribute information of the target information, which level is determined by the information delivery center based on the setting information;
the user selects either the first communication means or the second communication means to be used for obtaining the target information, based on the determination information, and
the level of attribute information is a time taken for the mobile body to reach a communication area for a nearest DSRC terminal device.

**17.** (Amended) An information delivery server which performs communication with a mobile body residing in a first communication area via first communication means using DSRC communication, and performs communication with the mobile body residing in a second communication area, which is larger than the first communication area, via second communication means, the first communication means carrying out communication with a higher speed than the second communication means,
the information delivery server comprising:
determining means for determining a time taken for the mobile body to reach a communication area for a nearest DSRC terminal device, as a level of attribute information of target information the user wishes to obtain; and
selecting means for selecting either the first communication means or the second communication means to be used for delivery of the target information to the mobile body, based on a determination result of the determining means.

**18.** (Amended) An information delivery server which performs communication with a mobile body residing in a first communication area via first communication means using DSRC communication, and performs communication with the mobile body residing in a second communication area, which is larger than the first communication area, via second communication means, the first communication means carrying out communication with a higher speed than the second communication means,
the information delivery server comprising:
determining means for determining a time taken for the mobile body to reach a communication area for a nearest DSRC terminal device, as a level of attribute information of target information the user wishes to obtain from the information delivery center;
determination information transmitting means for transmitting determination information, which is a determination result of the determining means, to the mobile body via either the first communication means or the second communication means;
selecting result receiving means for receiving from the mobile body a selecting result made by the user as to which of the first communication means and the second communication means is used for obtaining the target information, which result is made based on the determination information transmitted from the determination information transmitting means; and
selecting means for selecting either the first communication means or the second communication means to be used for delivery of the target information to the information reproduction device, based on the selecting result received by the selecting result receiving means.

**19.** (Amended) An information delivery control method for an information delivery system,
the information delivery system comprising first communication means for enabling communication between an information delivery center and a mobile body which resides in a first communication area via DSRC communication; and second communication means for enabling communication between the information delivery center and the mobile body which resides in a second communication area larger than the first communication area, wherein the first communication means carries out communication with a higher speed than the second communication means,
the method comprising the step of:
selecting either the first communication means or the second communication means to be used for transmission of target information which the user wishes to obtain from the information delivery center, based on a level of attribute information of the target information, which level indicates a time taken for the mobile body to reach a communication area for a nearest DSRC terminal device.

**20.** (Amended) An information delivery control method for an information delivery system,
the information delivery system comprising first communication means for enabling communication between an information delivery center and a mobile body which resides in a first communication area via DSRC communication; and second communication means for enabling communication between the information delivery center and the mobile body which resides in a second communication area larger than the first communication area, wherein the first communication means carries out communication with a higher speed than the second communication means,
the method comprising the steps of:
determining in the information delivery center a time taken for the mobile body to reach a communication area for a nearest DSRC terminal device, as a level of attribute information of target information, which a user of the mobile body wishes to obtain from the information delivery center, and transmitting determination, which is used as a determination result, to the mobile body via either the first communication means or the second communication means; and
transmitting to the information delivery center a selecting result made by the user as to which of the first communication means and the second communication means is used for obtaining the target information, which result is made based on the determination information transmitted from the determination information transmitting means, and selecting either the first communication means or the second communication means to be used for delivery of the target information to the mobile body, based on the selecting result.

**21.** An information delivery control program for causing a computer to execute the information delivery control method as set forth in claims 19 or 20.

**22.** A computer-readable storage medium storing the information delivery control program as set forth in claim 21.

**23.** The information delivery system as set forth in claim 1, wherein:
the information delivery center includes a content item data base for accumulating a plurality of content item files, and an information delivery server for delivering the content item files,
the information reproduction device reproduces content items received from the information delivery center via content item delivery means, and
the information reproduction mode changing means is capable of changing content or reproduction order of the content items in the information reproduction device, which content and order are determined when the content item is created, according to one or a plurality of: event information produced by operation by a user, event information transmitted from the information delivery center, event information from an external sensor, and event information produced in the information reproduction device.

**24.** The information delivery system as set forth in claim 23, wherein:
the content items are delivered in such a manner that the plurality of content item files are accumulated in an upper directory of a tree-structure including a plurality of lower directories, allowing a user of the information reproduction device to select a target upper directory or a lower directory so that all content item data in the target upper directory or the lower directory thus selected are downloaded as one group.

**25.** The information delivery system as set forth in claim 23, wherein:
the information delivery center has an accounting function for carrying out predetermined accounting operation regarding delivery of the content items from the information delivery center to a plurality of the information reproduction devices.

**26.** The information delivery system as set forth in claim 23, wherein:
each of the plurality of content item files previously includes a guide content item for showing details or usage instruction of the content item, the guide content item is reproduced whenever required by switching operation by the user.

**27.** The information delivery system as set forth in claim 23, wherein:
the plurality of content item files are automatically updated in the information reproduction device by delivering update event information of content item data from the information delivery center to the information reproduction device, and downloading via the content item delivery means updating content item data specified by the information reproduction device using the update event information before the user uses the information reproduction device under a predetermined condition, so that when the user starts up the information reproduction device, the content items are immediately updated before reproduced, thereby reducing communication load of the information delivery center.

**28.** The information delivery system as set forth in claim 23, wherein:
each of the plurality of content item files includes a program introduction content item for introducing other programs than a content item program currently reproduced, allowing the user to make a request of one of the programs in the program introduction content item with respect to the information delivery center using the event information produced by operation by the user, so as to obtain the program via the content item delivery means and reproduce the program after the content item program currently reproduced.

**29.** The information delivery system as set forth in claim 23, wherein:
each of the plurality of content item files includes a link content item which contains link information leading to other related content item, and a request guidance; and other content items than the content items accumulated in the information reproduction device are downloaded to the information reproduction device on user's request for obtaining the link content item.

**30.** The information delivery system as set forth in claim 23, wherein:
each of the plurality of content item files includes other content item as reference item of the content item, which reference item is previously decided by a content item creator; and each of the plurality of content item files includes information for allowing the user of the information reproduction device to make a request of the other content item during reproduction of a content item currently selected by the user, so as to enable delivery of other content item as a background job during reproduction of a content item.

**31.** An information reproduction device which receives a plurality of content item files via the content item delivery means from an information delivery center including a content item data base for accumulating the plurality of content item files, and an information delivery server for delivering the content item files, the information reproduction device reproducing the content items received from the information delivery center,
the information reproduction device is capable of changing content or reproduction order of the content items in the information reproduction device, which content and order are determined when the content item is created, according to one or a plurality of: event information produced by operation by a user, event information transmitted from the information delivery center, event information from an external sensor, and event information produced in the information reproduction device.

**32.** An information reproduction method for (i) receiving a plurality of content item files via the content item delivery means from an information delivery center including a content item data base for accumulating the plurality of content item files, and an information delivery server for delivering the content item files, and (ii) reproducing the content items received from the information delivery center,
the method comprising the step of:
changing content or reproduction order of the content items in the information reproduction device, which content and order are determined when the content item is created, according to one or a plurality of: event information produced by operation by a user, event information transmitted from the information delivery center, event information from an external sensor, and event information produced in the information reproduction device.

**33.** An information delivery control method for (i) delivering a plurality of content item files via the content item delivery means from an information delivery center, which includes a content item data base for accumulating the plurality of content item files, and an information delivery server for delivering the content item files,
wherein:
the content items delivered from the information delivery center are received and reproduced by a plurality of information reproduction devices, and the content items are delivered according to one or a plurality of: event information produced by operation by a user, event information transmitted from the information delivery center, event information from an external sensor, and event information produced in the information reproduction device.

**34.** A computer-readable program storage medium, which stores a program for (i) receiving a plurality of content item files via the content item delivery means from an information delivery center including a content item data base for accumulating the plurality of content item files, and an information delivery server for delivering the content item files, and (ii) reproducing the content items received from the information delivery center,
the program comprising the step of:
changing content or reproduction order of the content items in the information reproduction device, which content and order are determined when the content item is created, according to one or a plurality of: event information produced by operation by a user, event information transmitted from the information delivery center, event information from an external sensor, and event information produced in the information reproduction device.

Statement under Art. 19.1 PCT

As described in the amended claims, the present invention determines a time taken for the mobile body to reach a communication area for a nearest DSRC terminal device.
In contrast, the reference in "Category X" cited in the international search has no teaching of this structure of "selecting either the first communication means or the second communication means to be used for delivery of the target information, according to the time taken for the mobile body to reach a communication area for a nearest DSRC terminal device". Accordingly, the present invention with the structure differs from the invention described in the reference.
